(19) Europäisches Patentamt

European Patent Office

Office européen des brevets

(11) **EP 1 399 453 B1**

(12) **EUROPÄISCHE PATENTSCHRIFT**

(45) Veröffentlichungstag und Bekanntmachung des Hinweises auf die Patenterteilung:
**02.03.2005 Patentblatt 2005/09**

(51) Int Cl.7: **C07F 9/28**

(21) Anmeldenummer: 02738157.3

(86) Internationale Anmeldenummer:
**PCT/EP2002/006360**

(22) Anmeldetag: **11.06.2002**

(87) Internationale Veröffentlichungsnummer:
**WO 2003/002579 (09.01.2003 Gazette 2003/02)**

(54) **NEUE STARKE SÄUREN, DEREN HERSTELLUNGSVERFAHREN UND DEREN VERWENDUNGEN**

NOVEL STRONG ACIDS, PRODUCTION METHOD AND USES THEREOF

NOUVEAUX ACIDES FORTS, LEURS PROCEDES DE PRODUCTION ET LEURS UTILISATIONS

(84) Benannte Vertragsstaaten:
**AT BE CH CY DE DK ES FI FR GB GR IE IT LI LU MC NL PT SE TR**

(30) Priorität: **27.06.2001 DE 10130940**

(43) Veröffentlichungstag der Anmeldung:
**24.03.2004 Patentblatt 2004/13**

(73) Patentinhaber: **MERCK PATENT GmbH**
**64293 Darmstadt (DE)**

(72) Erfinder:
- **IGNATYEV, Nikolai**
  **47058 Duisburg (DE)**
- **SCHMIDT, Michael**
  **64342 Seeheim-Jugenheim (DE)**
- **KÜHNER, Andreas**
  **64291 Darmstadt (DE)**
- **HILARIUS, Volker**
  **64823 Gross-Umstadt (DE)**
- **HEIDER, Udo**
  **Winchester S022 4HZ (GB)**
- **KUCHERYNA, Andriy**
  **47053 Duisburg (DE)**
- **SARTORI, Peter**
  **86919 Utting (DE)**

- **WILLNER, Helge**
  **45481 Mühlheim/Ruhr (DE)**

(56) Entgegenhaltungen:
EP-A- 1 162 204          EP-A- 1 178 050
EP-A- 1 205 998          WO-A-00/21969

- KITA, F. ET AL: "Electronic structures and electrochemical properties of LiPF6-n(CF3)n" JOURNAL OF POWER SOURCES (2001), 97-98, 581-583 , XP004254576
- PAVLENKO N V ET AL: "REACTION OF TRIS(PERFLUOROALKYL)PHOSPHINE OXIDES AND TRIS(PERFLUOROALKYL)DIFLUOROPHOSPH ORANES WITH FLUORIDE ION" JOURNAL OF GENERAL CHEMISTRY USSR, CONSULTANTS BUREAU. NEW YORK, US, Bd. 59, Nr. 3, 1. März 1989 (1989-03-01), Seiten 469-473, XP002053432
- JANDER, JOCHEN ET AL: "Formation of trifluromethyllated fluoro phosphates by reaction of trimethyltrifluoromethyltin with phosphorus(V) fluoride" JUSTUS LIEBIGS ANN. CHEM. (1969), 726, 19-24 , XP001088644
- BISHOP; CAREY; NIXON; SWAIN: J. CHEM. SOC. (A), 1970, Seiten 1074-1076, XP001088624
- CHAN; WILLIS: CAN. J. CHEM., Bd. 46, 1968, Seiten 1237-1248, XP002207039

EP 1 399 453 B1

**Beschreibung**

Die vorliegende Erfindung betrifft Säuren der allgemeinen Formel [I],

$$[R_yPF_{6-y}]^- \, H^+ \qquad\qquad\qquad [I]$$

wobei

y = 1, 2 oder 3 ist,

und worin

die Liganden R gleich oder verschieden sein können und

R für eine perfluorierte $C_{1-8}$-Alkyl- oder Aryl-Gruppe oder R für eine teilfluorierte $C_{1-8}$-Alkyl- oder Aryl-Gruppe steht, in dem F oder H durch Chlor teilweise substituiert sein kann.

Ferner betrifft die vorliegende Erfindung Verfahren zur Herstellung der erfindungsgemäßen Säuren, Salze aus einem Kation und dem Anion einer der erfindungsgemäßen Säuren sowie Verfahren zur Herstellung der Salze. Des weiteren betrifft die Erfindung die Verwendung der erfindungsgemäßen Säuren und Metallsalze.

Hexafluorphosphorsäure, $HPF_6$, findet Verwendung als Katalysator in der organischen Chemie oder als Ausgangsverbindung zur Herstellung verschiedener Salze. Industriell wird Hexafluorphosphorsäure durch die Reaktion [1] von Phosphorpentaoxid und wasserfreier Fluorwasserstoffsäure gewonnen.

$$P_4O_{10} + 24 \, HF \rightarrow 4 \, HPF_6 + 10 \, H_2O \qquad\qquad\qquad [1]$$

Nachteilig an diesem Verfahren ist die Toxizität und die Gefahr, die mit dem Umgang der Ausgangsverbindung Fluorwasserstoff einhergehen, sowie die stark exotherme Wärmeentwicklung der Reaktion.

Hexafluorphosphorsäure wird als 65 Gew.-%ige wässrige Lösung käuflich angeboten. In höherer Konzentration ist die Lösung nicht stabil. Reine Hexafluorphosphorsäure kann in flüssigem Schwefeldioxid hergestellt werden, ist jedoch bei Raumtemperatur nicht stabil (D.E.C. Colbridge, Phosphorus. An Outline of chemistry, Biochemistry and Technology (Second Edition) Elsevier Scientific Publishing Comp. Amsterdam-Oxford-New York, 1980). Die mangelnde Stabilität hochkonzentrierter Hexafluorphosphorsäurelösungen schränkt die Anwendungsmöglichkeiten dieser Säure als Katalysator ein. Zudem reduziert die Koordination des Protons mit dem Phosphorhexafluoridanion die Protonenaktivität dieser Säure.

[-2a]

Der vorliegenden Erfindung liegt daher die Aufgabe zugrunde, Fluorphosphorsäureverbindungen zur Verfügung zu stellen, die die Nachteile des Standes der Technik nicht aufweisen.

Gelöst wird diese Aufgabe durch eine Säure der allgemeinen Formel [I],

$$[R_yPF_{6-y}]^- \, H^+ \qquad\qquad\qquad [I]$$

wobei

y = 1, 2 oder 3,

und worin

die Liganden R gleich oder verschieden sein können und

R für eine perfluorierte $C_{1-8}$-Alkyl- oder Aryl-Gruppe oder R für eine teilfluorierte $C_{1-8}$-Alkyl- oder Aryl-Gruppe steht, in dem F oder H durch Chlor teilweise substituiert sein kann.

Die perfluorierten wie auch die teilfluorierten Alkyl- oder Arylgruppen R können als Ketten- oder Ringstrukturen vorliegen.

Einige Salze der erfindungsgemäßen Säuren sind bekannt.

Fusaji Kita et al, J. of Power Sources (2001), 97-98, 581-583, offenbart beispielsweise den strukturellen Effekt der Lithiumsalze $LiPF_{6-n}(CF_3)_n$ auf die Eigenschaften von Elektrolyten im Vergleich zu $LiPF_6$.

N.V. Pavlenko et al, J. of General Chemistry Ussr, (01-03-1989), 59(3), 469-473, offenbart die Synthese der Cäsiumsalze $Cs[(C_2F_5)_2PF_4]$ und $Cs[(CF_3)_3PF_3]$.

J. Jander et al, Justus Liebigs Ann. Chem. (1969), 726, 19-24, offenbart Tetraphenylarsonium- und Trimethylzinnsalze mit den Anionen $[PF_5CF_3]^-$ und $[PF_4(CF_3)_2]^-$, sowie das Anion $[HPF_4CF_3]^-$.

E.O. Bishop et al, J. Chem. Soc. (a) (1970), 1074-1076, offenbart und interpretiert das NMR-Spektrum von $Cs[(CF_3)_2PF_4]$.

S.S. Chan et al, J. Chem. Soc. (a) (1970), 1074-1076, offenbart und interpretiert das NMR-Spektrum von $Cs[(CF_3)_2PF_4]$.

Die nach dem Prioritätsdatum dieser Anmeldung, aber vor dem Anmeldedatum dieser Anmeldung veröffentlichten Patentanmeldungen EP 1 205 998 A2, EP 1 178 050 A2 und EP 1 162 204 offenbaren Gemische aus Fluoralkylphosphat-Salzen und Polymeren oder Fluoralkylphosphatsalze mit unterschiedlichen Kationen, beispielsweise $Li^+$, Ammonium, Phosphonium oder auch heterocyclischen Kationen, wie Imidazolium.

Bevorzugt sind Säuren, bei denen mindestens eine Gruppe R für eine perfluorierte *n*-, *iso*- oder *tert*.-Butyl- oder einen Pentafluorphenylgruppe und besonders bevorzugt für eine Pentafluorethylgruppe steht.

Weiterhin bevorzugt sind Säuren, bei denen y = 2 oder 3 ist. Besonders bevorzugt sind Säuren, bei denen y = 3 ist.

Besonders bevorzugt sind die erfindungsgemäßen Säuren Trifluortris(pentafluorethyl)phosphorsäure, Trifluortris(nonafluor-n-butyl)-phosphorsäure, Trifluortris(heptafluor-n-propyl)phosphorsäure, Tetrafluorbis-(nonafluor-n-butyl)phosphorsäure, Pentafluor(nonafluor-n-butyl)-phosphorsäure, Tetrafluorbis(heptafluor-i-propyl)phosphorsäure.

Zur Nomenklatur der fluorierten Phosphorsäuren wird auf die IUPAC-Nomenklatur verwiesen (A Guide to IUPAC Nomenclature of Organic Compounds. Recommendations, by R. Panico, W.H. Powell and Jean-Claude Richer, Blackwell Science, 1993).

Die erfindungsgemäßen Säuren haben gegenüber den bisher bekannten Fluorphosphorsäuren den Vorteil, das sie leicht herzustellen sind, eine hohe Protonenaktivität aufweisen und in hochkonzentrierter Lösung bei Raumtemperatur stabil sind.

Ferner betrifft die vorliegende Erfindung Verfahren zur Herstellung der erfindungsgemäßen Säuren, bei denen ein Perfluoralkylphosphoran in Gegenwart eines geeigneten Lösungsmittels und/oder Protonenakzeptors mit Fluorwasserstoff umgesetzt wird.

Die Herstellung von Perfluoralkylphosphoranen als Ausgangsverbindungen für das erfindungsgemäße Verfahren ist dem Fachmann aus dem Stand der Technik geläufig, beispielsweise aus der deutschen Patentanmeldung DE 19 846 636 A1.

Als geeignete Lösungsmittel und/oder Protonenakzeptoren für die erfindungsgemäßen Verfahren werden vorzugsweise Verbindungen mit ein, zwei oder mehreren der folgenden Atome eingesetzt: O, N, S, P, Se, Te, As.

Bevorzugt werden Wasser, Alkohole, Ether, Sulfide, Amine, Phosphine, Carbonsäuren, Ester, Glykole, Polyglykole, Polyamine, Polysulfide oder Mischungen von mindestens zwei dieser Lösungsmittel und/oder Protonenakzeptoren eingesetzt.

Besonders bevorzugte Lösungsmittel und/oder Protonenakzeptoren sind Wasser, Methanol, Ethanol, Essigsäure, Dimethylether, Diethylether, Dimethylcarbonat, Dimethylsulfid, Dimethylformamid, Triethylamin oder Triphenylphosphin oder Mischungen von mindestens 2 dieser Verbindungen.

Die Konzentration an Fluorwasserstoff in dem geeigneten Lösungsmittel beträgt vorzugsweise mehr als 0,1 Gew.-% HF, besonders bevorzugt mehr als 5 Gew.-% HF und ganz besonders bevorzugt mehr als 10 Gew.-% und am meisten bevorzugt mehr als 20 Gew.-% aber weniger als 100 Gew.-% HF.

In einer bevorzugten Ausführungsform findet die Umsetzung des Perfluoralkylphosphorans in den erfindungsgemäßen Verfahren bei einer Temperatur von -50 bis +100 °C, vorzugsweise bei einer Temperatur von -35 bis +50 °C, besonders bevorzugt bei 0 bis 25 °C statt.

Mit den erfindungsgemäßen Verfahren sind Säuren gemäß der allgemeinen Formel [I] in hohen Ausbeuten leicht zugänglich.

Die vorliegende Erfindung betrifft auch Lösungen der erfindungsgemäßen Säuren, die eine Konzentration von mehr als 2 Gew.-%, vorzugsweise mehr als 20 Gew.-%, besonders bevorzugt mehr als 70 Gew.-%, am meisten bevorzugt mehr als 80 Gew.-% der Säure in einem geeigneten Lösungsmittel aufweisen.

Mit den erfindungsgemäßen Lösungen, insbesondere in den hohen Konzentrationsbereichen sind Protonenaktivitäten möglich, die mit Lösungen anderer Fluorphosphorsäuren nur schwer zugänglich sind. Dies ist insbesondere bei der Verwendung der erfindungsgemäßen Säuren in hochkonzentrierter Form, z.B. als Katalysator in einem Reaktionsgemisch, von Vorteil. Eine hochkonzentrierte Lösung vermeidet auch die unerwünschte Verdünnung von Reaktionsgemischen.

Des weiteren betrifft die vorliegende Erfindung ein Verfahren zur Herstellung eines Salzes der allgemeinen Formel [II]

$$[R_yPF_{6-y}]_m^- M^{m+} \qquad\qquad [II]$$

wobei

$M^{m+}$ ein ein-, zwei- oder dreiwertiges Kation ist,

m = 1, 2 oder 3

und y = 1, 2 oder 3 ist

und worin

die Liganden R gleich oder verschieden sein können und

R für eine perfluorierte $C_{1-8}$-Alkyl- oder Aryl-Gruppe oder R für eine teilfluorierte $C_{1-8}$-Alkyl- oder Aryl-Gruppe steht, in dem F oder H durch Chlor teilweise substituiert sein kann, wobei die perfluorierten wie auch teilfluorierten Alkyl- oder Arylgruppen R als Ketten- oder Ringstruktur vorliegen können.

Bei dem Kation $M^{m+}$ kann es sich um ein Metallkation oder um ein organisches Kation handeln.

Geeignete organische Kationen sind dem Fachmann bekannt und sind beispielsweise in der deutschen Patentanmeldung DE 10109032.3 auf den Seiten 4 bis 6 beschrieben.

Vorzugsweise enthalten die Salze der allgemeinen Formel [II] ein Li-, Zn-, Mg-, Cu-, Ag-, Ammonium-, Phosphonium-, Oxonioum-, Sulphonium-, Arsonium-, Tropilium-, ein ein Nitryl-Kation, Nitrosyl-Kation oder ein Tris(dialkylammino)-carbonium-Kation.

Vorteilhaft an den Salzen der Formel [II] ist ihre gute Löslichkeit in organischen Lösungsmitteln.

In einer bevorzugten Ausführungsform werden diese Salze durch ein Verfahren hergestellt, bei dem eine erfindungsgemäße Säure in einem geeigneten Lösungsmittel mit einem Salz gemäß der allgemeinen Formel [III]

$$M^{m+} (A)^{m-} \hspace{4cm} \text{[III]}$$

wobei

$M^{m+}$ ein ein-, zwei- oder dreiwertiges Kation ist,

A für ein basisches oder neutrales Anion oder ein Gemisch basischer Anionen oder für ein Gemisch mindestestens eines basichen und mindestens eines neutralen Anions steht,

und m = 1, 2 oder 3 ist,

oder mit Metallen, Metallhydriden, Metalloxiden oder Metallhydroxiden

umgesetzt wird.

Vorzugsweise werden in dem Verfahren Salze gemäß der Formel [III] eingesetzt, die mindestens ein Carbonat-, ein Chlorid-, ein Fluorid-, ein Formiat-, ein Acetat- oder ein Trifluoracetatanion enthalten.

Vorzugsweise werden in dem Verfahren Anionen eingesetzt, die leicht flüchtige Säuren wie beispielsweise Salzsäure, Ameisensäure oder Essigsäure bilden.

Vorzugsweise werden in dem Verfahren als Metalle Li, Na, K, Rb, Mg, Cs, Ca, Sr, Ba, Sc, Y, Yb, La, Al, In, Cd und/oder Zn, als Oxide $Li_2O$, $Na_2O$, $K_2O$, MgO, CaO, SrO, BaO, $Sc_2O_3$, $Y_2O_3$, $Yb_2O_3$, $La_2O_3$, $Al_2O_3$, CdO, ZnO, CuO, FeO und/oder $Fe_2O_3$, als Hydroxide LiOH, NaOH, KOH, RbOH, CsOH, $Mg(OH)_2$, $Ca(OH)_2$, $Sr(OH)_2$, $Ba(OH)_2$, $Cd(OH)_2$, $Zn(OH)_2$, $Sc(OH)_3$, $Al(OH)_3$ und/oder $Cu(OH)_2$ und als Hydride LiH, NaH, $CaH_2$, $YH_3$ und/oder $AlH_3$ eingesetzt.

Das Verfahren zur Herstellung der Salze der Formel [II] ist einfach zu handhaben und bietet hohe Ausbeuten.

Ein Salz der Formel [II] findet beispielsweise Verwendung als Katalysator, als Phasentransferkatalysator, als Lösungsmittel, insbesondere als "ionic liquid" (ionische Flüssigkeit), oder als Leitsalz in den Elektrolyten verschiedener elektrochemischer Vorrichtungen.

Unter einer "ionic liquid" (ionische Flüssigkeit) versteht der Fachmann organische Verbindungen mit ionischer Struktur und niedrigem Schmelzpunkt, beispielsweise N,N-dialkyl-imidazolium-Salze [C.E. Song, E.J. Roh, Chem. Comm. (Camebridge) 2000, 10, S. 837-838; J. Howarth, Tetrahedron Lett. 41 (2000) 34, S. 6627-6629; C.E. Song, C. E. Oh, E.J. Roh, D.J. Choo, Chem. Comm. (Camebridge) 2000, 18, S. 1743-1744 ).

Auch betrifft die vorliegende Erfindung die Verwendung einer erfindungsgemäßen Säure als Katalysator bei der Herstellung organischer Verbindungen.

Die erfindungsgemäßen Säuren eignen sich besonders gut als Ersatz für die Säuren $HPF_6$ und/oder $HBF_4$ bei chemischen Umsetzungen.

Die erfindungsgemäßen Säuren und/oder Salze finden vorzugsweise in einem der folgenden Verfahren Anwendung:

Verfahren zur

- Herstellung von photosensitiven Polymeren [CA (Chemical Abstracts) 110: 15956e],
- Herstellung von Dihydroxydiarylverbindungen [CA 110: 94679t],
- Oberflächenbehandlung von Metallen [CA 110: 139975e],
- Herstellung elektrisch leitender Anilinpolymere [CA 110: 155067r],

- Herstellung von Carbonsäuren und Carbonsäureestern [CA 110: 233613g]
- Herstellung hochmolekularer Diazoniumverbindungen [CA 110: 87472n],
- Herstellung von Epoxidharzen [CA 111: 135490r],
- Herstellung von elektrisch leitenden Materialien aus aminartigen Verbindungen [CA 112: 46758n],
- Herstellung von Octadienolen [CA 112: 98016p],
- Carboaminierung oder Carboamidierung von Olefinen [CA 112: 161007d],
- Isomerisierung von Butenen [CA 112: 157653u],
- Herstellung von elektrisch leitenden Polyalkoxythiophenen [CA 115: 50551u],
- Entschwefelung von Öl und Abwässern [CA 116: 261878q],
- Herstellung Triglycidyltrimethylol-alkan-basierender Zusammensetzungen [CA 117: 92344a],
- Herstellung von Polymeren aus Styrol und Kohlenmonoxid [CA 117: 172290v],
- Herstellung von organischen Salzen als Informationsspeicher [CA 117: 17381g],
- Herstellung von Informationsträgern mit guter Lichtresistenz [CA 115: 267063w],
- Herstellung von Siliziumträgermaterialien für Katalysatoren [CA 117: 74989k]
- Polymerisation von Pyrrolderivaten [CA 117: 70577b],
- Copolymerisierung von Kohlenmonoxid und einer olefinisch ungesättigten Verbindung [CA 118: 7520h],
- Herstellung elektrisch leitender Polymere [CA 118: 137707k],
- Herstellung von magnetischen Kontrastmitteln [CA 118: 299355x],
- Herstellung von Polymerüberzügen [CA 119: 54608y],
- Entfernung von Oxidschichten auf Edelstahl [CA 119: 77272y],
- Synthese von Methyl-t-butylether [CA 119: 202992m],
- Herstellung zyklischer 5-7 kohlenstoffhaltiger Sulfoniumsalze [CA 119: 249826a],
- Herstellung von Cyclosiloxanen [120: 108008u],
- Raffinierung schwerer Öle und Bitumen [CA 120: 195633k],
- Behandlung von Aluminiumverbindungen [CA 120: 283104u],
- Herstellung quatemärer Pyridinium- oder Aniliniumsalze [CA 121: 9165g],
- Copolymerisation von Olefinen und Kohlenmonoxid [CA 121: 10209f],
- Herstellung aromatischer hydroxylischer Verbindungen [CA 121: 133684q],
- Herstellung von Essigesterderivaten [CA 121: 157308w],
- Herstellung von Harz aus Dialkenylbenzol und Polyarylaminen [CA 122: 70050c],
- Herstellung von substituierten Pyrrolo-pyrimidin-4-onen [CA 122: 314562q],
- Rückgewinnung von Petroleum [CA 122: 295102w],
- Verwendung als nichtwässriger Batterieelektrolyte [CA 122: 118595j],
- Herstellung stabiler Methylkationen [CA 124: 288639q],
- Herstellung zyklischer Sulfoniumsalze [CA 125: 114470h],
- Herstellung optischer Speichermaterialien [CA 125: 127895a],
- Herstellung konjugierter Fluorpyridiniumsalze [ CA 125: 119500c],
- Herstellung von Iridiumdiphosphinkomplexen [CA 126: 226760e],
- asymmetrischen Hydrogenierung von Iminen [CA 126: 225097g],
- Hydroformylierung ungesättigter Verbindungen [CA 126: 225032g],
- Polymersynthese [CA 126:104554v],
- Herstellung von Polymeren aus Polycycloolefinen mit Silylgruppen [CA 127: 110414m],
- Herstellung von Rutheniumkatalysatoren [CA 127: 83071p],
- Herstellung von Ibuprofen [CA 127: 318741y],
- Herstellung von Cyclohexadienylverbindungen [CA 126: 212225x],
- Olefincopolymerisation [CA 126: 199931c],
- Herstellung anorganischer Methylimidazoliniumsalze [CA 128: 167423p],
- Herstellung von SiCO- und SiC-Keramikfasern [CA 128: 234151p],
- Herstellung von Thermoprintmaterialien [CA 128: 210892e],
- Herstellung von Polymeren [CA 129: 317091r],
- Herstellung von Aziridin-polyetherverbindungen [CA 131: 35901v],
- Herstellung von Dicarbonsäurediestem [CA 131: 199417t],
- Hydroxylierung aromatischer Kohlenwasserstoffe [CA 129: 218223d],
- Herstellung von Carbonsäuren und Carbonsäureestern [CA 129: 216347y],
- Vorbehandlung lithographischer Druckplatten [CA 129: 195815g],

Im folgenden wird die Erfindung anhand von Beispielen erläutert. Diese Beispiele dienen lediglich der Erläuterung der Erfindung und schränken den allgemeinen Erfindungsgedanken nicht ein.

Nach dem erfindungsgemäßen Verfahren können beispielsweise Trifluortris(perfluoralkyl)phosphorsäuren durch Umsetzung von Difluortris(perfluoralkyl)phosphoranen mit Fluorwasserstoff in geeigneten Lösungsmitteln in nahezu quantitativer Ausbeute hergestellt werden. Überraschenderweise wird diese Ausbeute fast nicht durch Hydrolyse beeinträchtigt.

Mit dem erfindungsgemäßen Verfahren kann beispielsweise eine hochkonzentrierte wässrige Lösung aus Trifluortris(pentafluorethyl) phosphorsäure innerhalb weniger Minuten durch Umsetzung von Difluortris(pentafluorethyl)phosphoran mit 18,3 Gew.-% wässriger HF hergestellt werden. Die Reaktion verläuft gemäß der Reaktionsgleichung [2]:

$$(C_2F_5)_3PF_2 + HF + 5\ H_2O \rightarrow [(C_2F_5)_3PF_3]^-H^+ \cdot 5\ H_2O \qquad\qquad [2]$$

Die resultierende Lösung weist eine Konzentration von 83,2 Gew.-% auf und ist über mehrere Wochen bei Raumtemperatur stabil.

Auch Säurekonzentrationen von weniger als 83,2 Gew.-% können so hergestellt werden, beispielsweise durch Verdünnung mit einem geeigneten Lösungsmittel oder durch die Umsetzung eines Phosphorans mit stärker verdünnter Fluorwasserstoff-Lösung.

Die Umsetzung von Phosphoranen mit verdünnteren wässrigen Fluorwasser-stoff-Lösungen, beispielsweise 2 Gew.-%, nehmen jedoch mehr Zeit in Anspruch. Bei stärker verdünnten wässrigen Fluorwasserstofflösungen entsteht zuerst ein Addukt aus Wasser und Phosphoran, das dann langsam in das stabilere Produkt umgesetzt wird.

Die Umsetzungsgeschwindigkeit des Addukts in das Produkt ist temperaturabhängig. Bei Raumtemperatur dauert die Umsetzung gemäß Reaktion [2] in 2 Gew.-%iger Fluorwasserstoff Lösung 2 Tage. Bei -21°C und unter gleichen Konzentrationsverhältnissen werden innerhalb von sechs Tagen nur 30% des Addukts in Trifluortris(pentafluorethyl)-phosphorsäure umgesetzt.

Bei der Umsetzung des Phophorans im Eisbad gemäß der Reaktionsgleichung [2] mit einer 4,3 Gew.-%igen wässrigen Fluorwasserstofflösung wird innerhalb von 2-3 Minuten eine Mischung von Phosphoran-Wasser-Addukt und Trifluortris (pentafluorethyl)phosphorsäure im Verhältnis 1:2 gebildet.

Die Umsetzung kann bei Normaldruck oder Überdruck, gegebenfalls auch unter Schutzgasatmosphäre, erfolgen.

Trifluortris(pentafluorethyl)phosphorsäure kann in zwei unterschiedichen Konformationen vorliegen, der meridionalen oder der facialen Konformation. Beide Strukturen existieren im Gleichgewicht. Dieses Gleichgewicht ist abhängig von der Temperatur und der Fluorwasserstoffkonzentration in Wasser bei der Umsetzung der Edukte. Zuerst wird die meridionale Struktur ausgebildet, die dann ein Gleichgewicht mit der facialen Struktur erreicht.

Der Fachmann versteht, dass bei den erfindungsgemäßen starken Säuren das Proton als Komplex mit dem jeweiligen Lösungsmittel vorliegt. Bei der Formulierung der Formeln in den Beispielen wurde der Komplex aus Proton und Lösungsmittel daher nicht ausformuliert.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Alle NMR-Spektren wurden auf einem Bruker Spektrometer WP 80 SY gemessen ($^1$H: 80 MHz, $^{19}$F: 75,47 MHz).

**Beispiele**

Beispiel 1

Zu 3,14 g einer 40 Gew.-%igen wässrigen Flußsäure (62,8 mmol HF) wurden in einem FEP (Fluorethylenpolymer)-Gefäß 3,74 g Wasser hinzugefügt (insgesamt 312,1 mmol Wasser). Nach dem Runterkühlen dieser Mischung in einem Eisbad wurden unter Rühren mit einem Magnetrührer innerhalb von 2 Minuten 26,55 g (62,3 mmol) Difluortris (pentafluorethyl)phosphoran hinzugefügt. Innerhalb von 3 Minuten war die Gesamtmenge Phosphoran gelöst und es wurde eine farblose klare Lösung von wässriger Säure $[(C_2F_5)_3PF_3]^-$ H$^+$ gebildet. Es wurden 33,4 g einer 83,2 Gew. %igen Trifluorotris(pentafluorethyl)phosphorsäure-Lösung in nahezu quantitativer Ausbeute hergestellt.

Die Verbindung entspricht der Formel: $[(C_2F_5)_3PF_3]^-$ H$^+$ $\cdot$ 5H$_2$O.

Die Lösung wurde durch $^{19}$F NMR-Spektroskopie untersucht. Die Spektren wurden unter Verwendung einer FEP-Röhre mit einem Aceton-D$_6$ Film als externer "lock" und CCl$_3$F als externe Referenz gemessen.

$^{19}$F NMR, δ, ppm: -44.03 dm (PF); -80,61 m (CF$_3$); -82.47 m (2CF$_3$); -88,99 dm (PF$_2$); -115.36 dm (3CF$_2$); J$^1_{P,F}$=889 Hz; J$^1_{P,F}$=907 Hz; J$^2_{P,F}$=92 Hz.

Diese Signale gehören zur meridionalen Struktur der Säure $[(C_2F_5)_3PF_3]^-$ H$^+$ $\cdot$5H$_2$O Innerhalb von 2 Tagen bildete sich ein neues Doublet im $^{19}$F NMR-Spektrum bei -67,41 ppm; $J^1_{P,F}$=786 Hz (PF$_3$-Gruppe) aus, welches der facialen Struktur der Säure [(C$_2$F$_5$)$_3$PF$_3$]$^-$ H$^+$ ·5H$_2$O zuzuordnen ist. Keine weiteren Änderungen wurden während der Lagerung bei Raumtemperatur innerhalb der nächsten 3 Wochen festgestellt. Die 83,2 Gew.%ige Säure erreichte bei Raumtemperatur eine Gleichgewichtsmischung von etwa 90% der meridionalen und 10% der facialen Konformation der Säure.

Beispiel 2

Zu 1,88 g einer 40 Gew.-%igen wässrigen Flußsäure-Lösung (37,6 mmol HF) wurden in einem FEP-Gefäß 2,24 g Wasser (insgesamt 186,8 mmol Wasser) hinzugefügt. Unter Rühren der Reaktionsmischung mit einem Magnetrührer wurden 15,88 g (37,3 mmol) Difluortris(pentafluorethyl)phosphoran innerhalb von 3 Minuten zu der wässrigen HF-Lösung bei Raumtemperatur gegeben. Durch die exotherme Reaktion wurden Temperaturen bis zu 50 °C erreicht, während sich das Phsphoran löste. Es entstanden 20,0 g einer farblosen klaren Lösung aus [(C$_2$F$_5$)$_3$PF$_3$]$^-$ H$^+$ in Wasser mit einer Konzentration von 83,2 Gew.% in nahezu quantitativer Ausbeute. Die Lösung wurde durch $^{19}$F NMR-Spektroskopie untersucht. Die Spektren wurden unter Verwendung einer FEP-Röhre mit einem Aceton-D$_6$ Film als externer "lock" und CCl$_3$F als externe Referenz gemessen.
$^{19}$F NMR (meridionale Konformation), δ, ppm: -44,46 dm (PF); -81,05 m (CF$_3$); -82,85 m (2CF$_3$); -89,54 dm (PF$_2$); -115,74 dm (3CF$_2$); $J^1_{P,F}$= 889 Hz; $J^1_{P,F}$= 905 Hz; $J^2_{P,F}$=93 Hz.
$^{19}$F NMR (faciale Konformation), δ, ppm: -67,82 dm (PF$_3$); $J^1_{P,F}$= 784 Hz. Andere Signale der facialen Konformation überlappten mit den Signalen der merdionalen Konformation.
Die Spektren zeigen, dass in diesem Fall beide Konformationen der Säure, sowohl die meridionale als auch die faciale Konformation zum Zeitpunkt der Herstellung der Lösung entstehen.

Beispiel 3

Zu 3,91 g einer 40 Gew.-%igen wässrigen Flußsäure-Lösung (78,2 mmol HF) wurden in einem FEP-Gefäß 10,57 g Wasser hinzugefügt (insgesamt 716,8 mmol Wasser). Nach dem Runterkühlen dieser Mischung in einem Eisbad wurden 33,34 g (78,2 mmol) Difluortris(pentafluorethyl)phosphoran unter Rühren mit einem Magnetrührer innerhalb von 3 Minuten hinzugefügt. Innerhalb dieser Zeit löste sich das gesamte Phosphoran und eine klare Lösung von [(C$_2$F$_5$)$_3$PF$_3$]$^-$ H$^+$ entstand. Es wurden
47,8 g einer wässrigen Trifluorotris(pentafluorethyl)phosphorsäure (I) in einer Konzentration von 73,0 Gew.% in quantitativer Ausbeute erhalten.
$^{19}$F NMR (CCl$_3$F - externe Rerferenz): -44,45 dm (PF); -80,84 m (CF$_3$); -82,57 m (2CF$_3$); -89,13 dm (PF$_2$); -115,75 dm (3CF$_2$); $J^1_{P,F}$=889 Hz; $J^1_{P,F}$= 909 Hz; $J^2_{P,F}$= 92 Hz.
Die aufgeführten Signale gehören zur meridionalen Struktur der Säure [(C$_2$F$_5$)$_3$PF$_3$]$^-$ H$^+$ und zeigten innerhalb von 5 Tagen keine Änderungen im Spektrum auf. Somit zeigt die Säure [(C$_2$F$_5$)$_3$PF$_3$]$^-$ H$^+$ in der vorliegenden Konzentration bei Raumtemperatur vorzugsweise die meridionale Konformation auf.

Beispiel 4

Zu 1,51 g einer 40 Gew.-%igen wässrigen Flußsäure-Lösung (30,2 mmol HF) wurden in einem FEP-Gefäß 12,46 g Wasser (insgesamt 741,7 mmol Wasser) hinzugefügt. Nach dem Runterkühlen dieser Mischung in einem Eisbad wurden unter Rühren mit einem Magnetrührer innerhalb von 3 Minuten 12,74 g (29,9 mmol) Difluortris(pentafluorethyl)phosphoran hinzugefügt. In diesem Zeitraum wurde das gesamte Phosphoran gelöst und es wurden 26,7 g einer farblosen, klaren Lösung der Säure in nahezu quantitativer Ausbeute erhalten.
Das $^{19}$F NMR-Spektrum zeigte die Gegenwart zweier Formen von hexakoordiniertem Phosphor. Die erste Form ist ein Komplex von Difluortris(pentafluorethyl)phosphoran mit Wasser:
$^{19}$F NMR (CCl$_3$F - externe Referenz): -80,39 m (CF$_3$); -81,31m (2CF$_3$); -89,19 dm (PF$_2$); -113,78 dm (3CF$_2$); -164,59 s (H$_3$O$^+$·HF) $J^1_{P,F}$ = 846 Hz ; $J^2_{P,F}$ =89 Hz.
Die zweite Form ist die gewöhnliche meridionale Konformation von Trifluortris(pentafluorethyl)phosphorsäure [(C$_2$F$_5$)$_3$PF$_3$]$^-$ H$^+$.
$^{19}$F NMR (CCl$_3$F - externe Referenz): -44,60 dm (PF); -80,81 m (CF$_3$); -82,49 m (2CF$_3$); -89,34 dm (PF$_2$); -115,96 dm (3CF$_2$); $J^1_{P,F}$ = 889 Hz ; $J^1_{P,F}$ = 884 Hz; $J^2_{P,F}$ = 95 Hz.
Innerhalb von 4 Tagen der Lagerung bei Raumtemperatur zeigte das $^{19}$F NMR-Spektrum nur noch die Gegenwart der meridionalen Konformation der Trifluortris(pentafluorethyl)phosphorsäure [(C$_2$F$_5$)$_3$PF$_3$]$^-$ H$^+$ in Lösung auf.

Beispiel 5

Zu 1,47 g einer 40 Gew.-%igen wässrigen Flußsäure-Lösung (29,4 mmol HF) wurden in einem FEP-Gefäß 29,60 g Wasser (insgesamt 1691,6 mmol Wasser) hinzugefügt. Nach dem Runterkühlen dieser Mischung in einem Eisbad wurden unter Rühren mit einem Magnetrührer innerhalb von drei Minuten 12,47 g (29,3 mmol) Difluortris(pentafluorethyl)phosphoran hinzugefügt. Innerhalb dieses Zeitraums wurde das gesamte Phosphoran gelöst und eine farblose, klare Lösung von 43,5 g hergestellt.

Das $^{19}$F NMR-Spektrum zeigte, dass in diesem Fall hauptsächlich das wässrige Adukt direkt beim Hinzufügen des Phosphorans entsteht.

$^{19}$F NMR (CCl$_3$F - externe Referenz): -79,49 m (CF$_3$); -80,74 m (2 CF$_3$); -88,60 dm (PF$_2$); -113,35 dm (3CF$_2$); -162,54 s (H$_3$O$^+$ · HF) J$^1_{P,F}$=842 Hz; -J$^2_{P,F}$=89 Hz.

Innerhalb von fünf Tagen bei Raumtemperatur konvertierte dieses Adukt vollständig in die Tris(pentafluorethyl)trifluorphosphorsäure [(C$_2$F$_5$)$_3$PF$_3$]$^-$H$^+$. Dieses wurde durch $^{19}$F NMR-Spektroskopie bestätigt.

Beispiel 6

5,64 g (122,3 mmol) Dimethylether wurden mit einem Ethanolbad auf -35 °C in einem FEP-Gefäß gekühlt. Nacheinander wurden zuerst 1,42 g (71,0 mmol) Fluorwasserstoff (HF) langsam zur Reaktionsmischung hinzugegeben und anschließend innerhalb von fünf Minuten 30,25 g (71,0 mmol) Difluortris(pentafluorethyl)phosphoran unter Rühren der Reaktionsmischung mit einem Magnetrührer. Nach Auflösen des Phosphorans und Erwärmen der

Reaktionsmischung auf Raumtemperatur wurden 37,3 g einer farblosen klaren Lösung gewonnen.

Diese Lösung wurde durch $^{19}$F NMR-Spektroskopie untersucht. Die Spektren wurden unter Verwendung einer FEP-Röhre mit einem Acetonitril-D$_3$ Film als externer "lock" und CCl$_3$F als interne Referenz gemessen.

Das $^{19}$F NMR-Spektrum zeigte, dass in diesem Fall vorzugsweise die Säure [(C$_2$F$_5$)$_3$PF$_3$]$^-$ H$^+$ mit der meridionalen Struktur ausgebildet wird.

$^{19}$F NMR der meridionalen Konformation: -43,58 dm (PF); -80,19 m (CF$_3$); -81,90 m (2CF$_3$); -87,03 dm (PF$_2$); -115,51 dm (3CF$_2$); J$^1_{P,F}$=888 Hz; J$^1_{P,F}$=894 Hz; J$^2_{P,F}$=94 Hz.

Innerhalb von drei Tagen stieg die Konzentration der facialen Konformation der Säure [(C$_2$F$_5$)$_3$PF$_3$]$^-$ H$^+$ in der Mischung.

$^{19}$F NMR-Spektrum der facialen Konformation: -66,12 dm; J$^1_{P,F}$=798 Hz (PF$_3$-Gruppe).

Andere Signale der facialen Konformation überlappten mit den Signalen der meridionalen Konformation.

Keine weiteren Änderungen der $^{19}$F NMR-Spektren wurden innerhalb von fünf Wochen während der Lagerung bei Raumtemperatur beobachtet.

Beispiel 7

6,04 g (81,5 mmol) trockener Diethylether wurden in einem FEP-Gefäß durch ein Eisbad gekühlt. Unter Rühren mit einem Magnetrührer wurden zuerst 0,92 g (45,9 mmol) Fluorwasserstoff (HF) langsam zu dem Diethylether hinzugefügt und dann innerhalb von 5 Minuten 18,67 g (43,8 mmol) Difluortris(pentafluorethyl)phosphoran hinzugefügt. Nach dem Auflösen des Phosphorans innerhalb von ein bis zwei Minuten und Erwärmen der Reaktionsmischung auf Raumtemperatur, entstanden 25,6 g einer farblosen klaren Lösung.

Diese Lösung wurde durch $^{19}$F NMR-Spektroskopie untersucht. Die Spektren wurden unter Verwendung einer FEP-Röhre mit einem Acetonitril-D$_3$ Film als externer "lock" und CCl$_3$F als interne Referenz gemessen.

Das $^{19}$F NMR-Spektrum zeigte, dass die Säure [(C$_2$F$_5$)$_3$PF$_3$]$^-$ H$^+$ in zwei Konformationen ausgebildet wird.

$^{19}$F NMR der meridionalen Konformation (ungefähr 85 mol%): -43,68 dm (PF); -80,00 m (CF$_3$); -81,71 m (2CF$_3$); -86,93 dm (PF$_2$); -115,31 dm (3CF$_2$); J$^1_{P,F}$=890 Hz; J$^1_{P,F}$=897 Hz; J$^2_{P,F}$=92 Hz.

$^{19}$F NMR-Spektrum der facialen Form (ungefähr 15 mol%): -67,37 dm; J$^1_{P,F}$=793 Hz (PF$_3$-Gruppe). Andere Signale der facialen Konformation überlappten mit den Signalen der meridionalen Konformation.

Keine Änderungen im $^{19}$F NMR-Spektrum wurden bei der Lagerung bei Raumtemperatur innerhalb von zwei Monaten festgestellt.

Beispiel 8

3,33 g (103,9 mmol) Methanol wurden in einem FEP-Gefäß mit einem Eisbad gekühlt. Unter Rühren mit einem Magnetrührer wurden zuerst 0,91 g (45,5 mmol) Fluorwasserstoff (HF) langsam zu dem Methanol gegeben und innerhalb von fünf weiteren Minuten 18,05 g (42,4 mmol) Difluortris(pentafluorethyl)phosphoran zur Reaktions-mischung hinzugefügt. Nach dem Auflösen des Phosphorans und dem Erwärmen der Reaktionsmischung auf Raumtemperatur wurden 22,2 g einer farblosen klaren Lösung erhalten.

Diese Lösung wurde durch $^{19}$F NMR-Spektroskopie untersucht. Die Spektren wurden unter Verwendung einer FEP-Röhre mit einem Acetonitril-D$_3$ Film als externer "lock" und CCl$_3$F als interne Referenz gemessen.
Das $^{19}$F NMR zeigt, dass in diesem Fall die Säure [(C$_2$F$_5$)$_3$PF$_3$]$^-$ H$^+$ in zwei Konformationen gebildet wird.

$^{19}$F NMR der meridionalen Konformation (ungefähr 85 mol%): -43,80 dm (PF); -80,50 m (CF$_3$); -81,93 m (2CF$_3$); -87,50 dm (PF$_2$); -114,93 dm (3CF$_2$); J$^1$$_{P,F}$=887 Hz; J$^2$$_{P, F}$=95 Hz.

$^{19}$F NMR-Spektrum der facialen Konformation (ungefähr 15 mol%): -66,44 dm; J$^1$$_{P,F}$=780 Hz. (PF$_3$-Gruppe). Andere Signale der facialen Form überlappten mit den Signalen der meridionalen Form.

Bei der Lagerung innerhalb eines Monats bei Raumtemperatur wurden keine Änderungen im $^{19}$F NMR-Spektrum festgestellt.

Beispiel 9

3,02 g (48,8 mmol) Dimethylsulfid (CH$_3$)$_2$S wurden in einem FEP-Gefäß durch ein Eisbad gekühlt. Unter Rühren mit einem Magnetrührer wurden zuerst 0,98 g (49,0 mmol) Fluorwasserstoff (HF) und anschließend innerhalb von fünf Minuten 20,88 g (49,0 mmol) Difluortris(pentafluorethyl)phosphoran zu dem Dimethylsulfid hinzugefügt. Nach dem Hinzufügen der gesamten Phosphoranmenge erhärtete die Reaktionsmischung vollständig. Nach zusätzlichem mechanischen Rühren und Trocknen der Reaktionsmischung bei Raumtemperatur im Argon Schutzgasstrom wurden 23,9 g eines farblosen festen Materials gewonnen.

0,4 g dieses Materials wurden in Acetonitril-D$_3$ gelöst und diese Lösung durch $^{19}$F NMR-Spektroskopie untersucht. CCl$_3$F wurde als interne Referenz verwendet.

Das $^{19}$F NMR-Spektrum zeigte, dass in diesem Fall die Säure [(C$_2$F$_5$)$_3$PF$_3$]$^-$ H$^+$ in der meridionalen Konformation gebildet wird.
$^{19}$F NMR: -43,54 dm (PF); -79,66 m (CF$_3$); -81,25 m (2CF$_3$); -86,83 dm (PF$_2$); -115,28 dm (3CF$_2$); J$^1$$_{P,F}$=889 Hz; J$^1$$_{P,F}$=906 Hz; J$^2$$_{P,F}$=92 Hz.

Beispiel 10

3,23 g (12,3 mmol) Triphenylphosphin (Ph$_3$P) wurden in einem Ethanol-Trockeneis-Bad in einem FEP-Gefäß auf -25 °C gekühlt. Unter Rühren der Reaktionsmischung mit einem Magnetrührer wurden zuerst 0,66 g (33,0 mmol) Fluorwasserstoff (HF) langsam zu dem Triphenylphosphin hinzugefügt und dann innerhalb weiterer fünf Minuten 5,25 g (12,3 mmol) Difluortris(pentafluorethyl)phosphoran hinzugefügt. Nach der Zugabe der gesamten Phosphoranmenge erhärtete die Reaktionsmischung vollständig. Nach zusätzlichem mechanischen Vermischen und Trocknen der Reaktionsmischung bei Raumtemperatur unter einem Argon-Schutzgasstrom wurden 8,8 g eines leicht gelben Feststoffs gewonnen.

0,4 g dieses Materials wurden in Acetonitril-D$_3$ gelöst und diese Lösung durch $^{19}$F NMR-Spektroskopie untersucht. CCl$_3$F wurde als interne Referenz verwendet.

Das $^{19}$F NMR-Spektrum zeigte, dass in diesem Fall die Säure [(C$_2$F$_5$)$_3$PF$_3$]$^-$ H$^+$ als Komplexe mit Triphenylphosphin in der meridionalen Konformation entsteht.

$^{19}$F NMR: -43,65 dm (PF); -79,75 m (CF$_3$); -81,34 m (2CF$_3$); -86,99 dm (PF$_2$); -115,45 dm (3CF$_2$); J$^1$$_{P,F}$=889 Hz; J$^1$$_{P,F}$=906 Hz; J$^2$$_{P,F}$=92 Hz.

Im $^{19}$F NMR-Spektrum ist ein kleines Signal von einem Rest HF sichtbar (-181,75 ppm).

$^1$H NMR: 7,8 m (Ph$_3$PH$^+$)

Beispiel 11

1,71 g (23,4 mmol) Dimethylformamid, HC(O)N(CH$_3$)$_2$ wurde in einem FEP-Gefäß mit einem Ethanol-Trockeneis-Bad auf -25°C gekühlt. Unter Rühren mit einem Magnetrührer wurden zuerst 0,566 g (28,3 mmol) Fluorwasserstoff (HF) langsam zu dem Dimethylformamid gegeben und dann bei 0 °C innerhalb von fünf Minuten 9,92 g (23,3 mmol) Difluotris(pentafluorethyl)phosphoran hinzugefügt. Nach der Zugabe der Gesamtmenge Phosphoran wurde die Reaktionsmischung auf Raumtemperatur erwärmt. Es wurden 12,2 g eines hochdichten, fast festen, weißen Materials hergestellt.

Kleine Mengen dieses Materials wurden in Dimethylformamid und in Acetonitril-D$_3$ gelöst und diese Lösungen durch $^{19}$F-und $^1$H-NMR-Spektroskopie untersucht. CCl$_3$F und TMS wurden als interne Referenz verwendet.

Das $^{19}$F NMR-Spektrum zeigte, dass in diesem Fall die Säure [(C$_2$F$_5$)$_3$PF$_3$]$^-$ H$^+$ in der meridionalen Konformation ausgebildet wird.

$^{19}$F-NMR (Lösungsmittel: Acetonitril-D$_3$): -43,64 dm (PF); -79,76 m (CF$_3$);
-81,35 m (2CF$_3$); -87,08 dm (PF$_2$); -115,35 dm (3CF$_2$); J$^1$$_{P,F}$=889 Hz; J$^1$$_{P,F}$=906 Hz; J$^2$$_{P,F}$=90 Hz.
Im $^{19}$F NMR-Spektrum wurde auch ein kleines Signal von restlichem Fluorwasserstoff festgestellt (-182,30 ppm).

$^1$H NMR (Lösungsmittel: Acetonitril-D$_3$): 3,12 s (CH$_3$); 3,27 s (CH$_3$); 8,19 s (CH); 10,97 s (H$^+$).

$^{19}$F NMR (Lösungsmittel: Dimethylformamid): -43,88 dm (PF); -79,76 m (CF3); -81,35 m (2CF$_3$); -87,08 dm (PF$_2$); -115,35 dm (3CF$_2$); J$^1$$_{P,F}$=889 Hz; J$^1$$_{P,F}$=906 Hz; J$^2$$_{P,F}$=90 Hz.

In dem $^{19}$F NMR-Spektrum wurde auch ein kleines Signal von einem Rest Fluorwasserstoff festgestellt (-182,30 ppm).

Beispiel 12

4,92 g (81,9 mmol) Essigsäure, CH$_3$COOH, wurde in einem FEP-Gefäß durch ein Eisbad gekühlt. Unter Rühren mit einem Magnetrührer wurden zuerst 0,424 g (21,2 mmol) Fluorwasserstoff (HF) langsam zu der Essigsäure hinzugefügt und dann innerhalb von fünf Minuten 8,83 g (20,7 mmol) Difluortris(pentafluorethyl)phosphoran hinzugefügt. Nach dem Lösen des Phosphorans und Erwärmen der Reaktionsmischung auf Raumtemperatur wurden 14,17 g einer farblosen, klaren Lösung gewonnen.

Diese Lösung wurde durch $^{19}$F NMR-Spektroskopie untersucht. Die Spektren wurden unter Verwendung einer FEP-Röhre mit einem Aceton-D$_6$ Film als externer "lock" und CCl$_3$F als externe Referenz gemessen. In diesem Beispiel zeigt das $^{19}$F NMR-Spektrum, dass sich die Säure [(C$_2$F$_5$)$_3$PF$_3$]$^-$ H$^+$ vorzugsweise in der meridionalen Struktur ausbil-det.

$^{19}$F NMR der meridionalen Form: -44,65 dm (PF); -80,94 m (CF$_3$); -82,58 m (2CF$_3$); -88,59 dm (PF$_2$); -116,16 dm (3CF$_2$); J$^1$$_{P,F}$=890 Hz; J$^2$$_{P,F}$=92 Hz.

$^1$H NMR (Acetonitrit-D$_3$-Film): 2,43 s (CH$_3$); 12,43 s (H$^+$).

Beispiel 13

0,077 g einer 40 Gew.-%igen wässrigen Flußsäure-Lösung (1,54 mmol HF) wurden in einem FEP-Gefäß mit 0,124 g Wasser gemischt (insgesamt 9,44 mmol Wasser). Unter Rühren mit einem Magnetrührer wurde diese Mischung in einem Eisbad gekühlt und 0,836 g (1,15 mmol) Difluortris(nonafluor-n-butyl)phosphoran innerhalb von zwei Minuten hinzugefügt. Innerhalb weiterer fünf Minuten war das gesamte Phosphoran gelöst und eine farblose, klare Lösung von [(C$_4$F$_9$)$_3$PF$_3$]$^-$ H$^+$ in Wasser entstanden. 1,037 g dieser Lösung von Trifluortris(nonafluor-n-butyl)phosphorsäure mit einer Konzentration von 83,6 Gew-% in Wasser wurde in nahezu quantitativer Ausbeute gewonnen. Die Lösung wurde durch $^{19}$F NMR-Spektroskopie untersucht. Die Spektren wurden unter Verwendung einer FEP-Röh-re mit einem Aceton-D$_6$ Film als externer "lock" und CCl$_3$F als externe Referenz gemessen.

$^{19}$F NMR, δ, tpm: -44,91 dm (PF); -82,47 m (3CF$_3$); -87,29 dm (PF$_2$);

-112,32 m (3CF$_2$); -120,15 m (1CF$_2$); -122,52 m (2CF$_2$); -126,24 m (3CF$_2$);

J$^1$$_{P,F}$=904 Hz;

J$^1$$_{p,F}$=929 Hz.

Beispiel 14

0,272 g (3,67 mmol) getrockneter Diethylether wurden in einem FEP-Gefäß mit einem Eisbad gekühlt. Unter Rühren mit einem Magnetrührer wurden zuerst 0,043 g (2,15 mmol) Fluorwasserstoff (HF) langsam zu dem Diethylether gegeben und dann innerhalb von fünf Minuten 0,864 g (1,19 mmol) Difluortris(nonafluor-nbutyl)phosphoran hinzugefügt. Während der Zugabe löste sich das gesamte Phosphoran und 1,17 g einer farblosen, klaren Lösung wurden hergestellt.

Die Lösung wurde durch $^{19}$F NMR-Spektroskopie untersucht. Die Spektren wurden unter Verwendung einer FEP-Röhre mit einem Acetonitril-d$_6$ Film als externer "lock" und CCl$_3$F als interne Referenz gemessen.

Das $^{19}$F NMR-Spektrum bestätigte, dass die Säure [(C$_4$F$_9$)$_3$PF$_3$]$^-$ H$^+$ (III) gebildet wird.

$^{19}$F NMR, δ, ppm: -44,17 dm (PF); -81,37 m (3CF$_3$); -84.76 dm (PF$_2$);

-112,00 m (3CF$_2$); -119,18 m (1CF$_2$); -121,32 m (2CF$_2$); -125,15 m (3CF$_2$);

J$^1$$_{P,F}$=907 Hz; J$^1$$_{P,F}$=939 Hz.

Beispiel 15

Bei 0 °C unter Rühren mit einem Magnetrührer wurden 0,68 g einer 18,3 Gew.-%igen wässrigen Flußsäure-Lösung (6,22 mmol HF) langsam zu 3,27 g (6,22 mmol) Trifluorbis(nonafluor-n-butyl)phosphoran gegeben. Innerhalb von drei Minuten war das gesamte Phosphoran gelöst und es bildete sich eine farblose klare Lösung von H$^+$ [(n-C$_4$F$_9$)$_2$PF$_4$]$^-$ in Wasser. Die Ausbeute betrug 3,95 g einer Lösung von Tetrafluorbis(nonafluor-n-butyl)phosphorsäure mit einer Konzentration von 85,9 Gew.-% in Wasser in nahezu quantitativer Ausbeute. Das Produkt entspricht der Formel H$^+$[(C$_4$F$_9$)$_2$PF$_4$]$^-$ · 5 H$_2$O.

Die Lösung wurde durch $^{19}$F NMR-Spektroskopie untersucht. Die Spektren wurden unter Verwendung eines FEP-Probenröhrchens innerhalb eines NMR-Röhrchens mit einer 5 mm dicken Wand aufgenommen, wobei ein Aceton-$D_6$-Film als externer "Lock" und $CCl_3F$ im Film als Referenz verwendet wurden.

$^{19}$F NMR-Spektrum, δ, ppm: - 70,72 dm ($PF_4$); -81,19 t ($2CF_3$); -115,15 dm ($2CF_2$); -122,58 m ($2CF_2$); -124,77 t (2 $CF_2$); $J^1_{P,F}$= 958 Hz; $J^2_{P,F}$= 105 Hz; $J^4_{F,F}$= 9,3 Hz; $J^4_{F,F}$= 16,4 Hz;

Beispiel 16

Bei 0 °C unter Rühren mit einem Magnetrührer wurden 0,713 g (1,67 mmol) Trifluorbis(heptafluor-i-propyl) phosphoran langsam (innerhalb von 2 Minuten) zu 0,217 g einer 20,8 Gew.-%igen, wässrigen Flußsäure-Lösung (2,26 mmol HF) gegeben. Während dieser Zeit wurde die Gesamtmenge Phosphoran gelöst, und es entstand eine farblose, klare Lösung von Tetrafluorbis-(heptafluor-ipropyl)phosphorsäure, $H^+$ [$(i-C_3F_7)_2PF_4$]$^-$, in Wasser.
Die Lösung wurde durch $^{19}$F NMR-Spektroskopie untersucht. Die Spektren wurden unter Verwendung eines FEP-Probenröhrchens innerhalb eines NMR-Röhrchens mit einer 5 mm-dicken Wand aufgenommen, wobei ein Aceton-$D_6$-Film als externer "Lock" und $CCl_3F$ im Film als Referenz verwendet wurden.

$^{19}$F NMR-Spektrum. δ, ppm: -58,37 dm ($PF_4$); -71,23 m ($4CF_3$); -182,72 dm ($2CF$); $J^1_{P,F}$= 955 Hz; $J^2_{P,F}$= 78,4 Hz.
Das Signal des überschüssigen HF wurde im $^{19}$F NMR-Spektrum bei 168,89 ppm gemessen.

Beispiel 17

6,57 g (36,7 mmol) Triethylenglycoldimethylether (Triglym) wurden in einem FEP-Gefäß durch ein Eisbad gekühlt. Zuerst wurden 0,74 g (37,0 mmol) Fluorwasserstoff (HF) langsam zu dem Triglym gegeben und dann innerhalb von fünf Minuten weitere 14,90 g (35,0 mmol) Difluortris(pentafluorethyl)phosphoran unter Rühren der Reaktionsmischung mit dem Magnetrührer hinzugeführt. Nach einer weiteren Stunde Rühren der Reaktionsmischung bei Raumtemperatur wurden 22,19 g eines gelbbraunen, sehr viskosen Stoffes gewonnen. Kleine Mengen dieses Materials wurden mit Dichlormethan verdünnt und diese Lösung durch $^{19}$F NMR-Spektroskopie untersucht. Die Spektren wurden unter Verwendung eines FEP-Proben-röhrchens innerhalb eines 5 mm NMR-Röhrchens mit einem Aceton-$D_6$-Film als externer "Lock" und $CCl_3F$ als internel Referenz aufgenommen.

Das $^{19}$F NMR-Spektrum zeigt, dass in diesem Fall ein Mol der Säure $H^+[(C_2F_5)_3PF_3]^-$ pro Mol Triglym gebildet werden.

$^{19}$F NMR-Spektrum der meridionalen Form (ca. 90%): -44,41 dm (PF); -80,35 m ($CF_3$); -82,00 m ($2CF_3$); -87,94 dm ($PF_2$); -115,87 dm ($3CF_2$); $J^1_{P,F}$= 890 Hz; $J^1_{P,F}$= 891 Hz; $J^2_{P,F}$= 90 Hz.

$^{19}$F NMR-Spektrum der facialen Form (ca. 10%): -68,29 dm; $J^1_{P,F}$= 794 Hz ($PF_3$ Gruppe).

Einige Signale der facialen Form überlappen mit denen der meridionalen Form.

Beispiel 18

6,78 g (16,9 mmol) Polyethylenglycol-400 (PEG 400) wurden in ein FEP-Gefäß gegeben und mit einem Eisbad gekühlt. Unter Rühren mit dem Magnetrührer wurden zuerst 0,79 g (39,5 mmol) Fluorwasserstoff (HF) langsam zu dem PEG-400 hinzugefügt und dann innerhalb von drei Minuten weitere 15,27 g (35,8 mmol) Difluortris(pentafluorethyl) phosphoran hinzugefügt. Nach dem Rühren dieser Reaktionsmischung bei Raumtemperatur über 10 Stunden wurden 21,8 g einer gelbbraunen, dichten, geleeartigen Masse gewonnen. Kleine Mengen dieses Materials wurden mit Dichlormethan verdünnt und die Lösung durch $^{19}$F NMR-Spektroskopie untersucht. Die Spektren wurden unter Verwendung eines FEP-Probenröhrchens innerhalb eines 5 mm NMR-Röhrchens mit einem Aceton-$D_6$-Film als externer "Lock" und $CCl_3F$ als interne Referenz aufgenommen.

Das $^{19}$F NMR-Spektrum zeigt, dass in diesem Fall die Säure $H^+$ [$(C_2F_5)_3PF_3$]$^-$ in polymerer Matrix ausgebildet wurde, ungefähr 2 Mol Säure pro 1 Mol Polyethylenglycol-400.

$^{19}$F NMR-Spektrum der meridionalen Form (ca. 80%): -44,64 dm (PF); -80,48 m ($CF_3$); -82,07 m ($2CF_3$); -88,00 dm ($PF_2$); -115,94 dm ($3CF_2$); $J^1_{P,F}$= 889 Hz; $J^1_{P,F}$= 894 Hz; $J^2_{P,F}$= 95 Hz.

$^{19}$F NMR-Spektrum der facialen Form (ca. 20%): -68,16 dm; $J^1_{P,F}$= 788 Hz ($PF_3$-Gruppe).

Andere Signale der facialen Form überlappten mit denen der meridionalen Form.

Beispiel 19

Das Ausgangsmaterial, Difluortris(pentafluorphenyl)phosphoran wurde hergestellt wie folgt: 0,711 g (1,34 mmol) Tris(pentafluorphenyl)phosphin in 5 cm$^3$ trockenem Toluol wurden mit 0,300 g (1,77 mmol) Xenondifluorid vermischt. Durch Erhitzen der Reaktionsmischung auf 50 bis 60 °C wurde das Gas freigesetzt. Innerhalb von 20 Minuten war die Reaktion beendet. Nach der Verdampfung des Lösungsmittels im Vakuum wurden 0,750 g einer weißen, festen Substanz isoliert. Die Ausbeute des Difluortris(pentafluorphenyl)-phosphorans betrug 98,5 Mol-%. Das $^{19}$F NMR-Spektrum der Verbindung stimmt mit den literaturbekannten Spektren überein (M. Fild und R. Schmutzler, J. Chem. Soc. (A), 1969, S. 840 - 843).

0,50 g getrockneter Diethylether und 0,107 g (0,187 mmol) Difluortris(pentafluorphenyl)phosphoran wurden in einem FEP-Gefäß durch ein Eisbad gekühlt. Zuerst wurden 0,050 g (2,5 mmol) Fluorwasserstoff, HF, und dann innerhalb von zwei Minuten 0,3 g Triethylamin unter Rühren der Reaktionsmischung mit dem Magnetrührer hinzugefügt. Während der Zugabe löste sich die Gesamtmenge Phosphoran auf und Triethylamoniumhydrofluorid fiel aus. Nach der Abtrennung des Bodensatzes und Verdampfen des Lösungsmittel im Vakuum wurden 0,13 g einer viskosen Substanz isoliert. Kleine Mengen dieses Materials wurden in Aceton-D$_6$ gelöst und diese Lösung durch $^{19}$F und $^1$H NMR-Spektroskopie untersucht. Das Spektrum bestätigte die Bildung von Trifluortris(pentafluorphenyl)phosphorsäure, [(C$_6$F$_5$)$_3$PF$_3$]$^-$ H$^+$ als Komplex mit Triethylamin.

$^{19}$F NMR-Spektrum (Lösungsmittel: Aceton-D$_6$; Referenz: CCl$_3$F, intern), δ, ppm: -6,73 dm (PF); -39,71 dm (PF$_2$); -132,06 m (4F); -134,75 m (2F); -160,42 t (1F); -161,24 t (2F); -166,20 m (6F); J$^1_{P,F}$= 811 Hz; J$^1_{P,F}$= 797 Hz; J$^3_{F,F}$= 20 Hz. $^1$H NMR-Spektrum (Lösungsmittel: Aceton-D$_6$; Referenz: TMS, intern), δ, ppm: 1,27 t (3CH$_3$), 3,04 q (3CH$_2$), 12,11 s (NH$^+$); J$^3_{H,H}$= 7,3 Hz.

Beispiel 20

6,36 g (70,6 mmol) trockenes Dimethylcarbonat, (CH$_3$O)$_2$CO wurden mit einem Eisbad in einem FEP-Gefäß gekühlt. Zuerst wurden 10,99 g (25,8 mmol) Difluortris(pentafluorethyl)phosphoran langsam zu dem Dimethylcarbonat hinzugefügt und dann der Reaktionsmischung innerhalb von 5 Minuten 0,615 g (30,7 mmol) Fluorwasserstoff (HF) unter Rühren mit dem Magnetrührer zugesetzt. Nach dem Auflösen des Phosphorans und dem Erwärmen der Reaktionsmischung auf Raumtemperatur wurden 17,8 g einer farblosen, klaren Lösung gewonnen.

Die Lösung wurde durch $^{19}$F NMR-Spektroskopie untersucht. Die Spektren wurden unter Verwendung eines FEP-Probenröhrchens innerhalb eines 5 mm NMR-Röhrchens mit einem Aceton-D$_6$-Film als externer "Lock" und CCl$_3$F als interne Referenz aufgenommen.

Das $^{19}$F NMR-Spektrum zeigt, dass in diesem Fall die meridionale Struktur der Säure [(C$_2$F$_5$)$_3$PF$_3$]$^-$ H$^+$ ausgebildet wird.

$^{19}$F NMR-Spektrum: -44,34 dm (PF); -80,26 m (CF$_3$); -81,93 m (2CF$_3$); -87,78 dm (PF$_2$); -115,85 dm (3CF$_2$); J$^1_{P,F}$= 889 Hz; J$^1_{P,F}$= 92 Hz.

$^1$H NMR-Spektrum (Aceton-D$_3$-Film, Standard: TMS): 4,49 s (CH$_3$); 17,54 s (H$^+$).

Anwendungen von Trifluortris(perfluoralkyl)phosphorsäuren

Beispiel 21

12,15 g einer 83,2 Gew.-%igen, wässrigen Trifluortris(pentafluorethyl)-phosphorsäure (hergestellt gemäß Beispiel 1) wurde bei 0 °C unter Rühren durch Zugabe von 0,95 g Lithiumhydroxid-Monohydrat in kleinen Portionen neutralisiert. 13,1 g einer klaren Lösung Lithiumtrifluor-tris(pentafluorethyl)-phosphat mit einer Konzentration von 78,2 Gew.-% in Wasser wurden gewonnen. Die Ausbeute des Lithiumtrifluortris(pentafluorethyl)phosphats war nahezu quantitativ. Die Lösung wurde durch $^{19}$F NMR-Spektroskopie untersucht. Die Spektren wurden unter

Verwendung eines FEP-Probenröhrchens innerhalb eines 5 mm NMR-Röhrchens mit einem Aceton-D$_6$-Film als externer "Lock" und CCl$_3$F im Film als Referenz aufgenommen.

$^{19}$F NMR-Spektrum, δ, ppm: -43,48 dm (PF); -79,54 m (CF$_3$); -81,30 m (2CF$_3$); -88,07 dm (PF$_2$); -114,21 dm (3CF$_2$); J$^1_{P,F}$= 891 Hz; J$^1_{P,F}$= 908 Hz; J$^2_{P,F}$= 92 Hz.

Beispiel 22

20,44 g einer 83,2 Gew.-%igen, wässrigen Trifluortris(pentafluorethyl)-phosphorsäure (hergestellt gemäß Beispiel 1) wurden durch die Zugabe von 1,42 g Lithiumcarbonat in kleinen Portionen unter Rühren neutralisiert. Die Ausbeute betrug 21,0 g einer klaren Lösung von Lithiumtrifluortris(pentafluor-ethyl)phosphat in einer Konzentration von 82,0 Gew.-% in Wasser. Die Ausbeute des Lithiumtrifluortris(pentafluroethyl)phosphats war nahezu quantitativ. Die Lösung wurde durch $^{19}$F NMR-Spektroskopie untersucht. Die Spektren wurden unter Verwendung eines FEP-Probenröhrchens innerhalb eines 5 mm NMR-Röhrchens mit einem Aceton-D$_6$-Film als externer "Lock" und CCl$_3$F im Film als Referenz aufgenommen.

$^{19}$F NMR-Spektrum, δ, ppm: -43,31 dm (PF); -79,44 m (CF$_3$); -81,19 m (2CF$_3$); -87,96 dm (PF$_2$); -114,20 dm

(3CF$_2$); J$^1$$_{P,F}$= 891 Hz; J$^1$$_{P,F}$= 907 Hz; J$^2$$_{P,F}$= 92 Hz.

Beispiel 23

Eine Lösung von 6,38 g (14,3 mmol) Trifluortris(pentafluorethyl)phosphorsäure in 1,9 g Diethylether (hergestellt analog nach dem Verfahren in Beispiel 7) wurde mit 6,0 cm$^3$ (15,0 mmol) einer 2,5 M Lösung von Butyllithium in Hexan durch langsame Zugabe bei 0 °C unter Rühren neutralisiert. Die Mischung wurde eine weitere halbe Stunde gerührt und der Komplex aus Lithium-trifluortris(pentafluorethyl)phosphat mit Diethylether (unten, leicht gelbe viskose Schicht) wurde vom Hexan abgetrennt (obere Schicht).

Das $^{19}$F NMR-Spektrum der Diethyletherlösung zeigte die Anwesenheit von Lithiumtrifluortris(pentafluorethyl)phosphat, das in nahezu quantitativer Ausbeute erhalten wurde. Die Spektren wurden unter Verwendung eines FEP-Probenröhrchens innerhalb eines 5 mm NMR-Röhrchens mit einem Aceton-D$_6$-Film als externer "Lock" und CCl$_3$F im Film als Referenz aufgenommen.

$^{19}$F NMR-Spektrum der meridionalen Form (ca. 85 mol %): -47,19 dm (PF); -79,80 m (CF$_3$); -81,34 m (2CF$_3$); -88,77 dm (PF$_2$); -114,84 dm (3CF$_2$); J$^1$$_{P,F}$= 867 Hz; J$^1$$_{P,F}$= 905 Hz; J$^2$$_{P,F}$= 92 Hz.

$^{19}$F NMR-Spektrum der facialen Form (ca. 15 mol %): -66,88 dm; J$^1$$_{p,F}$= 776 Hz (PF$_3$-Gruppe).

Andere Signale der facialen Form überlappten mit denen der meridionalen Form.

Beispiel 24

10,77 g einer 83,2 Gew.-%igen, wässrigen Trifluortris(pentafluorethyl)-phosphorsäure (hergestellt gemäß Beispiel 1) wurden mit 10 cm$^3$ Wasser verdünnt und unter Kühlen im Eisbad und Rühren mit 1,52 g Magnesium-hydroxycarbonat (Merck, Anteil des Mg-Kations mindestens 24 %) in kleinen Portionen neutralisiert. Der Überschuß Magnesiumhydroxycarbonat wurde abfiltriert und die Lösung des Magnesiumtrifluortris(pentafluorethyl)phosphats in Wasser durch $^{19}$F NMR-Spektroskopie untersucht. Die Spektren wurden unter Verwendung eines FEP-Probenröhrchens innerhalb eines 5 mm NMR-Röhrchens mit einem Aceton-D$_6$-Film als externer "Lock" und CCl$_3$F im Film als Referenz aufgenommen.

$^{19}$F NMR-Spektrum, δ, ppm: -43,34 dm (PF); -79,35 m (CF$_3$); -80,99 m (2CF$_3$), -88,11 dm (PF$_2$); -114,54 dm (3CF$_2$); J$^1$$_{P,F}$= 874 Hz; J$^1$$_{P,F}$= 899 Hz; J$^2$$_{P,F}$= 91 Hz.

Beispiel 25

7,19 g einer 83,2 Gew.-%igen, wässrigen Trifluortris(pentafluorethyl)-phosphorsäure (hergestellt gemäß Beispiel 1) wurde unter Kühlen im Eisbad und Rühren mit 10 cm$^3$ Wasser verdünnt und durch die Zugabe von 1,76 g Zinkhydroxycarbonat (Fluka, Anteil an Zn-Kation ≥ 58 %) in kleinen Portionen neutralisiert. Der Überschuß des Zinkhydroxycarbonats wurde abfiltriert und die Lösung des

Zinktrifluortris(pentafluorethyl)phosphats in Wasser durch $^{19}$F NMR-Spektroskopie untersucht. Die Spektren wurden unter Verwendung eines FEP-Probenröhrchens innerhalb eines 5mm NMR-Röhrchens mit einem Aceton-D$_6$-Film als externer "Lock" und CCl$_3$F im Film als Referenz aufgenommen.

$^{19}$F NMR-Spektrum, δ, ppm: -43,40 dm (PF); -79,56 m (CF$_3$); -81,23 m (2CF$_3$); -87,91 dm (PF$_2$); -114.45 dm (3CF$_2$); J$^1$$_{P,F}$= 890 Hz; J$^1$$_{P,F}$= 913 Hz; J$^2$$_{P,F}$= 96 Hz.

Beispiel 26

10,78 g einer 83,2 Gew-.-%igen, wässrigen Trifluortris(pentafluorethyl)-phosphorsäure (hergestellt gemäß Beispiel 1) wurde im Eisbad unter Rühren mit 10 cm$^3$ Wasser verdünnt und mit 2,78 g Kupfer (II) Hydroxycarbonat in kleinen Portionen neutralisiert. Der Überschuß an Kupferhydroxycarbonat wurde abfiltriert und die Lösung von Kupfertrifluortris(pentafluorethyl)phosphat in Wasser durch $^{19}$F NMR-Spektroskopie untersucht. Die Spektren wurden unter Verwendung eines FEP-Probenröhrchens innerhalb eines 5mm NMR-Röhrchens mit einem Aceton-D$_6$-Film als externer "Lock" und CCl$_3$F im Film als Referenz augenommen.

$^{19}$F NMR-Spektrum der meridionalen Form, δ, ppm: -47,88 dm (PF); -84,03 m (CF$_3$); -85,59 m (2CF$_3$); -92,70 dm (PF$_2$); -119,27 dm (3CF$_2$); J$^1$$_{P,F}$= 895 Hz; J$^2$$_{P,F}$= 87 Hz.

Das kleine Signal der facialen Form des Kupfersalzes war auch im Spektrum vorhanden: -71,44 d (PF$_3$); J$^1$$_{P,F}$= 790 Hz.

Beispiel 27

3,10 g einer 73,0 Gew.-%igen, wässrigen Trifluortris(pentafluorethyl)-phosphorsäure (hergestellt gemäß Beispiel 3) wurde unter Kühlung im Wasserbad und Rühren mit 5 cm$^3$ Wasser verdünnt und mit 0,74 g Silbercarbonat in kleinen Portionen neutralisiert. Der Überschuß an Silbercarbonat wurde abfiltriert und die Lösung von Silbertrifluortris (pentafluor-ethyl)phosphat in Wasser durch $^{19}$F NMR-Spektroskopie untersucht. Die Spektren wurden unter Verwendung eines FEP-Probenröhrchens innerhalb eines 5 mm NMR-Röhrchens mit einem Aceton-D$_6$-Film als externer "Lock" und CCl$_3$F im Film als Referenz aufgenommen.

$^{19}$F NMR-Spektrum, δ, ppm: -42,60 dm (PF); -78,66 m (CF$_3$); -80,35 m (2CF$_3$); -87,41 dm (PF$_2$); -114,06 dm (3CF$_2$); J$^1_{P,F}$= 890 Hz; J$^2_{P,F}$= 92 Hz.

Beispiel 28

Eine Lösung von 16,68 g (37,4 mmol) Trifluortris(pentafluorethyl)-phosphorsäure in 14,52 g Diethylether (hergestellt gemäß Beispiel 7) wurde langsam bei Raumtemperatur unter Rühren zu 20,50 g einer 50 Gew.-%igen Lösung von Tetra(nbutyl)phosphoniumchlorid (10,25 g oder 34,8 mmol) in Toluol gegeben. Die Mischung wurde weitere 30 Minuten gerührt und das Lösungsmittelgemisch bei einem Unterdruck von 13,3 Pa abdestilliert. 24,46 g einer weißen, festen Substanz wurden so gewonnen. Die Ausbeute des Tetra(n-Butyl)phosphoniumtrifluortris(pentafluorethyl)phosphats war nahezu quantitativ. Der Schmelzpunkt nach Kristallisation aus einer Methanol-Wasser-Mischung lag bei 73 - 74 °C.

Analyse: C 37,31 %, H 5,06 %; berechnet: 37,51%, H 5,15%.

$^{19}$F NMR-Spektrum (Lösungsmittel: Aceton-D$_6$; Referenz: CCl$_3$F-intern): -43,83 dm (PF); -79,72 m (CF$_3$); -81,23 m (2CF$_3$); -86,77 dm (PF$_2$); -115,43 dm (3CF$_2$); J$^1_{P,F}$ = 890 Hz; J$^1_{P,F}$ = 905 Hz; J$^2_{P,F}$ = 92 Hz.

$^1$H NMR-Spektrum (Lösungsmittel: Aceton-D$_6$; Referenz: TMS-intern): 0,95 t (4CH$_3$), 1,57 m (8CH$_2$), 2,34 m (4CH$_2$).

Beispiel 29

Unter Rühren und Kühlung im Eisbad wurden zu 8,28 g einer 83,2 Gew.%igen wässrigen Trifluortris(pentafluorethyl)Phosphorsäure (hergestellt gemäß Beispiel 1) langsam (über 2 Minuten) 11,37 g einer 20 Gew.%igen, wässrigen Lösung von Tetraethylaminoniumhydroxid gegeben. Die Reaktionsmischung wurde mit 100 cm$^3$ Wasser verdünnt und weitere 10 Minuten bei Raumtemperatur gerührt. Ein weißer Bodensatz wurde abfiltriert und zwei mal mit 30 cm$^3$ Wasser gewaschen. Nach der Lufttrocknung über Nacht wurden 8,55 eines weißen, festen Materials gewonnen. Die Ausbeute an Tetraethylammoniumtrifluortris(pentafluorethyl)phosphat betrug 96,3%. Analyse: C 29,14 %, H 3,40 %. N 2,49 %; berechnet: C 29,23 %, H 3,50 %, N 2,43 %. Der Schmelzpunkt nach der Kristallisation dieses Produktes aus einer Methanol-Wassermischung war unverändert lag 95°C.

$^{19}$F NMR-Spektrum (Lösungsmittel: Aceton-D$_6$; Referenz: CCl$_3$F-intern): -43,78 dm (PF); -79,69 m (CF$_3$); -81,24 m (2CF$_3$); -86,80 dm (PF$_2$); -115,36 dm (3CF$_2$); J$^1_{P,F}$ = 889 Hz; J$^1_{P,F}$ = 906 Hz; J$^2_{P,F}$ = 89 Hz.

$^1$H NMR-Spektrum (Lösungsmittel: Aceton-D$_6$; Referenz: TMS-intem): 1,39 tm (4CH$_3$), 3,48 q (4CH$_2$); J$^3_{H,H}$ = 7,3 HZ.

Beispiel 30

Unter Rühren und Kühlen im Eiswasserbad wurden 10,85 g einer 73,0 Gew.%igen, wässrigen Trifluortris (pentafluorethyl)phosphorsäure (hergestellt nach Beispiel 3) innerhalb von 3 Minuten langsam zu 81,47 g wässrigen Tetramethylammoniumhydroxids (hergestellt aus 6,47 g einer 25 Gew.%igen wässrigen (CH$_3$)$_4$N$^+$-OH durch Verdünnung mit 75 cm$^3$ Wasser) hinzugefügt. Die Reaktionsmischung wurde weitere 10 Minuten bei Raumtemperatur gerührt. Ein weißer Bodensatz wurde abfiltriert und dreimal mit 30 cm$^3$ Wasser gewaschen. Nach Lufttrocknung über Nacht wurden 8,55 g eines weißen, festen Materials gewonnen. Die Ausbeute an Tetramethylammoniumtrifluortris-(pentafluorethyl)phosphat betrug 95,2%. Der Schmelzpunkt lag bei 112°C.

$^{19}$F NMR-Spektrum (Lösungsmittel: Aceton-D$_6$; Referenz: CCl$_3$F-intern): -43,70 dm (PF); -79,70 m (CF$_3$); -81,24 m (2CF$_3$); -86,75 dm (PF$_2$); -115,43 dm (3CF$_2$); J$^1_{P,F}$ = 889 Hz; J$^1_{P,F}$ = 909 Hz; J$^2_{P,F}$ = 88 Hz.

$^1$H NMR-Spektrum (Lösungsmittel: Aceton-D$_6$; Referenz: TMS-intern): 3,42 s (4CH$_3$).

Beispiel 31

Unter Rühren und Kühlen der Reaktionsmischung im Eisbad wurden 3,95 g einer 85,9 Gew.%igen wässrigen Tetrafluorbis(nonafluor-n-butyl)phosphor-säure (hergestellt gemäß Beispiel 15) langsam innerhalb von 3 Minuten zu 54,58 g wässrigem Tetraethylammoniumhydroxid (hergestellt aus 4,58 g einer 20 Gew.%igen, wässrigen (C$_2$H$_5$)$_4$N$^+$-OH-Lösung durch Verdünnung mit 50 cm$^3$ Wasser) hinzugefügt. Die Reaktionsmischung wurde weitere 10 Minuten bei Raumtemperatur gerührt. Ein weißer Bodensatz wurde abfiltriert und zweimal mit 10 cm$^3$ Wasser gewa-

schen. Nach Lufttrocknung über Nacht wurden 3,05 g eines weißen, festen Materials gewonnen. Die Ausbeute an Tetraethylammoniumtetrafluorbis(nonafluor-n-butyl)phosphat betrug 72,6%.

$^{19}F$ NMR-Spektrum (Lösungsmittel: Aceton-D$_6$; Referenz: CCl$_3$F-intern): -70,20 dm (PF$_4$); -80,87 m (2CF$_3$); -116,04 dm (2CF$_2$); -122,34 m (2CF$_2$); -124,61 t (2CF$_2$); J$^1_{P,F}$ = 930 Hz; J$^2_{P,F}$ = 94 Hz; J$^4_{P,F}$ = 15,7 Hz.

$^1H$ NMR-Spektrum (Lösungsmittel: Aceton-D$_6$; Referenz: TMS-intern): 1,38 tm (4CH$_3$), 3,48 q (4CH$_2$); J$^3_{H,H}$ = 7,3 Hz.


Beispiel 32

Zu 1,72 g einer Lösung von Trifluortris(pentafluorethyl)phosphorsäure in Dimethylcarbonat, hergestellt gemäß Beispiel 20, wurden 0,030 g Lithiumpulver in kleinen Portionen bei Raumtemperatur unter Rühren mit dem Magnetrührer hinzugefügt. Zu Beginn reagierte die Reaktionsmischung heftig unter Abgabe von Wasserstoff. Eine vollständige Umsetzung der Reaktionskomponenten wurde durch Erwärmen der Reaktionsmischung auf bis zu 60 °C innerhalb eines Zeitraums von 30 Minuten erreicht.

Nach der Abtrennung überschüssigen Lithiumpulvers wurde die Lösung aus Lithiumtrifluortris(pentafluorethyl)phosphat in Dimethylcarbonat durch $^{19}F$ NMR- und $^1H$ NMR-Spektroskopie untersucht. Die Spektren wurden unter Verwendung eines FEP-Probenröhrchens innerhalb eines 5 mm NMR-Röhrchens mit einem Acteton-D$_6$ Film als externer "Lock" und CCl$_3$F im Film als Referenz aufgenommen.

$^{19}F$ NMR-Spektrum der meridionalen Form ($\approx$ 85 mol %): -44,53 dm (PF); -79,90 m (CF$_3$); -81,71 m (2CF$_3$); -87,77 dm (PF$_2$); -115,23 dm (3CF$_2$); J$^1_{P,F}$= 888 Hz; J$^2_{P,F}$= 91 Hz.

$^{19}F$ NMR-Spektrum der facialen Form ($\approx$ 15 mol %): -67,98 dm; J$^1_{P,F}$= 785 Hz (PF$_3$ group). Andere Signale der facialen Form überlappten mit denen der meridionalen Form.

$^1H$ NMR-Spektrum (Aceton-D$_3$-Film, Referenz; TMS): 4,35 s (CH$_3$).


Beispiel 33

16,09 g Trifluortris(pentafluorethyl)phosphorsäure in Dimethylcarbonat, hergestellt gemäß Beispiel 20, wurde mit 6,78 g trockenem Dimethylcarbonat verdünnt und mit 0,25 g Lithiumhydrid umgesetzt, das in kleinen Portionen zur Reaktionsmischung unter Rühren mit dem Magnetrührer und Kühlung im Eisbad hinzugefügt wurde. Am Anfang reagierte diese Reaktionsmischung heftig unter Abgabe von Wasserstoff. Nach der Zugabe der Gesamtmenge an Lithiumhydrid wurde auf Raumtemperatur erwärmt und eine weitere Stunde gerührt.

Nach der Abtrennung des überschüssigen Lithiumhydrids wurde die Lösung aus Lithiumtrifluortris(pentafluorethyl)phosphat in Dimethylcarbonat durch $^{19}F$ NMR- und $^1H$ NMR-Spektroskopie untersucht. Die Spektren wurden unter Verwendung eines FEP-Probenröhrchens innerhalb eines 5 mm NMR-Röhrchens mit einem Acteton-D$_6$ Film als externer "Lock" und CCl$_3$F als interne Referenz aufgenommen.

$^{19}F$ NMR-Spektrum der meridionalen Form ($\approx$ 85 mol %): -44,07 dm (PF); -80,12 m (CF$_3$); -81,77 m (2CF$_3$), -87,52 dm (PF$_2$); -115,17 dm (3CF$_2$): J$^1_{P,F}$= 888 Hz; J$^2_{P,F}$= 87 Hz.

$^{19}F$ NMR-Spektrum der facialen Form ($\approx$15 mol %): -68,40 dm; J$^1_{P,F}$= 795 Hz (PF$_3$ Gruppe). Andere Signale der facialen Form überlappten mit den der meridionlaen Form.

$^1H$ NMR-Spektrum (Aceton-D$_3$-Film, Standard: TMS): 4,21 s (CH$_3$).

Diese Lösung kann direkt zur Herstellung von Elektrolyten für Lithiumbaterien eingesetzt werden.


**Patentansprüche**

1. Säure der allgemeinen Formel [I],

$$[R_yPF_{6-y}]^-\ H^+ \qquad\qquad [I]$$

wobei
y = 1, 2 oder 3 ist,
und worin
die Liganden R gleich oder verschieden sein können und
R für eine perfluorierte C$_{1-8}$-Alkyl- oder Aryl-Gruppe oder R für eine teilfluorierte C$_{1-8}$-Alkyl- oder Aryl-Gruppe steht, in dem F oder H durch Chlor teilweise substituiert sein kann, wobei die perfluorierten wie auch teilfluorierten Alkyl- oder Arylgruppen R als Ketten- oder Ringstrukturen vorliegen können.

2. Säure gemäß Anspruch 1, **dadurch gekennzeichnet, dass** mindestens ein R für eine Nonafluorbutyl- oder eine Pentafluorphenylgruppe, besonders bevorzugt für eine Pentafluorethylgruppe steht.

3. Säure gemäß Anspruch 1 oder 2, **dadurch gekennzeichnet, dass** y = 2 oder 3, vorzugsweise y = 3 ist.

4. Säure gemäß einem der Anspruch 1 bis 3:

   Trifluortris(pentafluorethyl)phosphorsäure,
   Trifluortris(heptafluor-n-propyl)phosphorsäure,
   Trifluortris(nonafluor-n-butyl)-phosphorsäure,
   Tetrafluorbis(nonafluor-n-butyl)phosphorsäure,
   Pentafluor(nonafluor-n-butyl)phosphorsäure,
   Tetrafluorbis(heptafluor-i-propyl)phosphorsäure.

5. Verfahren zur Herstellung einer Säure gemäß einem der Ansprüche 1 bis 4, **dadurch gekennzeichnet, dass** ein Perfluoralkylphosphoran in Gegenwart eines geeigneten Lösungsmittels und/oder Protonenakzeptors mit Fluorwasserstoff umgesetzt wird.

6. Verfahren gemäß Anspruch 5, **dadurch gekennzeichnet, dass** als Lösungsmittel und/oder Protonenakzeptor Wasser, Alkohole, Ether, Sulfide, Amine, Phosphine, Carbonsäuren, Ester, Glykole, Polyglykole, Polyamine, Polysulfide oder Mischungen von mindestens zwei dieser Lösungsmittel und/oder Protonenakzeptoren eingesetzt werden.

7. Verfahren gemäß Anspruch 6, **dadurch gekennzeichnet, dass** das geeignete Lösungsmittel und/oder der Protonenakzeptor Methanol, Ethanol, Essigsäure, Dimethylether, Diethylether, Dimethylcarbonat, Dimethylsulfid, Dimethylformamid, Triethylamin oder Triphenylphosphin oder eine Mischung aus mindestens zwei dieser Verbindungen ist.

8. Verfahren gemäß einem der Ansprüche 5 bis 7, **dadurch gekennzeichnet, dass** die Umsetzung des Perfluoralkylphosphorans mit einer Lösung von Fluorwasserstoff in einem Lösungsmittel in einer Konzentration von mehr als 0,1 Gew.-% HF, vorzugsweise mehr als 5 Gew.-% HF, besonders bevorzugt mehr als 10 Gew.-% und ganz besonders bevorzugt mehr als 20 Gew.-%, aber weniger als 100 Gew.-% HF erfolgt.

9. Verfahren gemäß einem der Ansprüche 5 bis 8, **dadurch gekennzeichnet, dass** die Umsetzung des Perfluoralkylphosphorans bei einer Temperatur von -50 bis + 100 °C, vorzugsweise bei einer Temperatur von -35 bis +50 °C, besonders bevorzugt bei 0 bis 25 °C, erfolgt.

10. Lösung aus einer Säure gemäß einem der Ansprüche 1 bis 4 und einem Lösungsmittel, **dadurch gekennzeichnet, dass** die Säure in einer Konzentration von mehr als 2 Gew.-%, vorzugsweise mehr als 20 Gew.-%, besonders bevorzugt mehr als 70 Gew.-% und ganz besonders bevorzugt mehr als 80 Gew.-%, vorliegt.

11. Verfahren zur Herstellung eines Salzes der allgemeinen Formel [II]

$$[R_yPF_{6-y}]_m^-M^{m+} \tag{II}$$

wobei
$M^{m+}$ ein ein-, zwei- oder dreiwertiges Kation ist,
m = 1, 2 oder 3
und y = 1, 2 oder 3 ist
und worin
die Liganden R gleich oder verschieden sein können und
R für eine perfluorierte $C_{1-8}$-Alkyl- oder Aryl-Gruppe oder R für eine teilfluorierte $C_{1-8}$-Alkyl- oder Aryl-Gruppe steht, in dem F oder H durch Chlor teilweise substituiert sein kann, wobei die perfluorierten wie auch teilfluorierten Alkyl- oder Arylgruppen R als Ketten- oder Ringstrukturen vorliegen können,
**dadurch gekennzeichnet, dass** eine Säure gemäß einem der Ansprüche 1 bis 4 in einem geeigneten Lösungsmittel mit einem Salz gemäß der allgemeinen Formel [III]

$$M^{m+} (A)^{m-} \qquad\qquad [III]$$

wobei

$M^{m+}$ ein ein-, zwei- oder dreiwertiges Kation ist,

A für ein basisches oder neutrales Anion oder ein Gemisch basicher Anionen oder für ein Gemisch mindestens eines basichen und mindestens eines neutralen Anions steht,

und m = 1, 2 oder 3 ist,

oder mit Metallen, Metallhydriden, Metalloxiden oder Metallhydroxiden

umgesetzt wird.

12. Verfahren gemäß Anspruch 11, **dadurch gekennzeichnet, dass** das Salz gemäß der allgemeinen Formel [III] mindestens ein Oxid-, ein Hydrid-, ein Carbonat-, ein Hydroxid-, ein Chlorid-, ein Fluorid-, ein Formiat-, ein Acetatund/oder ein Trifluoracetat-Anion enthält.

13. Verfahren gemäß Anspruch 11, **dadurch gekennzeichnet, dass** als Metalle Li, Na, K, Rb, Mg, Cs, Ca, Sr, Ba, Sc, Y, Yb, La, Al, In, Cd und/oder Zn zur Neutralisation eingesetzt werden.

14. Verfahren gemäß Anspruch 11, **dadurch gekennzeichnet, dass** als Oxide $Li_2O$, $Na_2O$, $K_2O$, MgO, CaO, SrO, BaO, $Sc_2O_3$, $Y_2O_3$, $Yb_2O_3$, $La_2O_3$, $Al_2O_3$, CdO, ZnO, CuO, FeO und/oder $Fe_2O_3$ zur Neutralisation eingesetzt werden.

15. Verfahren gemäß Anspruch 11, **dadurch gekennzeichnet, dass** als Hydroxide LiOH, NaOH, KOH, RbOH, CsOH, $Mg(OH)_2$, $Ca(OH)_2$, $Sr(OH)_2$, $Ba(OH)_2$, $Cd(OH)_2$, $Zn(OH)_2$, $Sc(OH)_3$, $Al(OH)_3$ und/oder $Cu(OH)_2$ zur Neutralisation eingesetzt werden.

16. Verfahren gemäß Anspruch 11, **dadurch gekennzeichnet, dass** als Hydride LiH, NaH, $CaH_2$, $YH_3$ und/oder $AlH_3$ zur Neutralisation eingesetzt werden.

17. Verwendung einer Säure gemäß einem der Ansprüche 1 bis 4 als Katalysator bei der Herstellung organischer Verbindungen.

18. Verwendung einer Säure gemäß einem der Ansprüche 1 bis 4 als Ersatz für die Säuren $HPF_6$ und/oder $HBF_4$ bei chemischen Umsetzungen.

**Claims**

1. Acid of the general formula [I]

$$[R_yPF_{6-y}]^- H^+ \qquad\qquad [I]$$

where

y = 1, 2 or 3,

and in which

the ligands R may be identical or different, and

R stands for a perfluorinated $C_{1-8}$-alkyl or aryl group or R stands for a partially fluorinated $C_{1-8}$-alkyl or aryl group in which some of the F or H may be substituted by chlorine, where the perfluorinated and partially fluorinated alkyl or aryl groups R may be in the form of chain or ring structures.

2. Acid according to Claim 1, **characterised in that** at least one R stands for a nonafluorobutyl or pentafluorophenyl group, particularly preferably a pentafluoroethyl group.

3. Acid according to Claim 1 or 2, **characterised in that** y = 2 or 3, preferably y = 3.

4. Acid according to one of Claims 1 to 3:

trifluorotris(pentafluoroethyl)phosphoric acid,
trifluorotris(heptafluoro-n-propyl)phosphoric acid,
trifluorotris(nonafluoro-n-butyl)phosphoric acid,
tetrafluorobis(nonafluoro-n-butyl)phosphoric acid,
pentafluoro(nonafluoro-n-butyl)phosphoric acid,
tetrafluorobis(heptafluoro-i-propyl)phosphoric acid.

5. Process for the preparation of an acid according to one of Claims 1 to 4, **characterised in that** a perfluoroalkylphosphorane is reacted with hydrogen fluoride in the presence of a suitable solvent and/or proton acceptor.

6. Process according to Claim 5, **characterised in that** the solvent and/or proton acceptor employed is water, alcohols, ethers, sulfides, amines, phosphines, carboxylic acids, esters, glycols, polyglycols, polyamines, polysulfides or mixtures of at least two of these solvents and/or proton acceptors.

7. Process according to Claim 6, **characterised in that** the suitable solvent and/or the proton acceptor is methanol, ethanol, acetic acid, dimethyl ether, diethyl ether, dimethyl carbonate, dimethyl sulfide, dimethylformamide, triethylamine or triphenylphosphine or a mixture of at least two of these compounds.

8. Process according to one of Claims 5 to 7, **characterised in that** the reaction of the perfluoroalkylphosphorane with a solution of hydrogen fluoride is carried out in a solvent in a concentration of greater than 0.1% by weight of HF, preferably greater than 5% by weight of HF, particularly preferably greater than 10% by weight and very particularly preferably greater than 20% by weight, but less than 100% by weight, of HF.

9. Process according to one of Claims 5 to 8, **characterised in that** the reaction of the perfluoroalkylphosphorane is carried out at a temperature of -50 to +100°C, preferably at a temperature of -35 to +50°C, particularly preferably at 0 to 25°C.

10. Solution of an acid according to one of Claims 1 to 4 and a solvent, **characterised in that** the acid is present in a concentration of greater than 2% by weight, preferably greater than 20% by weight, particularly preferably greater than 70% by weight and very particularly preferably greater than 80% by weight.

11. Process for the preparation of a salt of the general formula [II]

$$[R_yPF_{6-y}]_m^- \ M^{m+} \hspace{4cm} [II]$$

where
$M^{m+}$ is a mono-, di- or trivalent cation,
m = 1, 2 or 3
and y = 1, 2 or 3,
and in which
the ligands R may be identical or different, and
R stands for a perfluorinated $C_{1-8}$-alkyl or aryl group or R stands for a partially fluorinated $C_{1-8}$-alkyl or aryl group in which some of the F or H may be substituted by chlorine, where the perfluorinated and partially fluorinated alkyl or aryl groups R may be in the form of chain or ring structures,
**characterised in that** an acid according to one of Claims 1 to 4 is reacted in a suitable solvent with a salt of the general formula [III]

$$M^{m+}(A)^{m-} \hspace{4cm} [III]$$

where
$M^{m+}$ is a mono-, di- or trivalent cation,
A stands for a basic or neutral anion or a mixture of basic anions or a mixture of at least one basic and at least one neutral anion,
and m = 1, 2 or 3,
or with metals, metal hydrides, metal oxides or metal hydroxides.

**12.** Process according to Claim 11, **characterised in that** the salt of the general formula [III] contains at least one oxide, hydride, carbonate, hydroxide, chloride, fluoride, formate, acetate and/or trifluoroacetate anion.

**13.** Process according to Claim 11, **characterised in that** the metals employed for the neutralisation are Li, Na, K, Rb, Mg, Cs, Ca, Sr, Ba, Sc, Y, Yb, La, Al, In, Cd and/or Zn.

**14.** Process according to Claim 11, **characterised in that** the oxides employed for the neutralisation are $Li_2O$, $Na_2O$, $K_2O$, MgO, CaO, SrO, BaO, $Sc_2O_3$, $Y_2O_3$, $Yb_2O_3$, $La_2O_3$, $Al_2O_3$, CdO, ZnO, CuO, FeO and/or $Fe_2O_3$.

**15.** Process according to Claim 11, **characterised in that** the hydroxides employed for the neutralisation are LiOH, NaOH, KOH, RbOH, CsOH, $Mg(OH)_2$, $Ca(OH)_2$, $Sr(OH)_2$, $Ba(OH)_2$, $Cd(OH)_2$, $Zn(OH)_2$, $Sc(OH)_3$, $Al(OH)_3$ and/or $Cu(OH)_2$.

**16.** Process according to Claim 11, **characterised in that** the hydrides employed for the neutralisation are LiH, NaH, $CaH_2$, $YH_3$ and/or $AlH_3$.

**17.** Use of an acid according to one of Claims 1 to 4 as catalyst in the preparation of organic compounds.

**18.** Use of an acid according to one of Claims 1 to 4 as replacement for the acids $HPF_6$ and/or $HBF_4$ in chemical reactions.

**Revendications**

**1.** Acide de la formule générale [I]

$$[R_yPF_{6-y}]^- \; H^+ \qquad\qquad\qquad [I]$$

dans laquelle
y = 1, 2 ou 3,
et dans laquelle
les ligands R peuvent être identiques ou différents, et
R représente un groupe $C_{1-8}$-alkyle ou aryle perfluoré ou R représente un groupe $C_{1-8}$-alkyle ou aryle partiellement fluoré où certains des F ou H peuvent être substitués par chlore, où les groupes R alkyle ou aryle perfluoré et partiellement fluoré peuvent être sous la forme de structures en chaîne ou en cycle.

**2.** Acide selon la revendication 1, **caractérisé en ce que** au moins un R représente un groupe nonafluorobutyle ou pentafluorophényle, particulièrement de préférence un groupe pentafluoroéthyle.

**3.** Acide selon la revendication 1 ou 2, **caractérisé en ce que** y = 2 ou 3, de préférence y = 3.

**4.** Acide selon l'une des revendications 1 à 3:

    acide trifluorotris(pentafluoroéthyl)phosphorique,
    acide trifluorotris(heptafluoro-n-propyl)phosphorique,
    acide trifluorotris(nonafluoro-n-butyl)phosphorique,
    acide tétrafluorobis(nonafluoro-n-butyl)phosphorique,
    acide pentafluoro(nonafluoro-n-butyl)phosphorique,
    acide tétrafluorobis(heptafluoro-i-propyl)phosphorique.

**5.** Procédé pour la préparation d'un acide selon l'une des revendications 1 à 4, **caractérisé en ce qu'**un perfluoroalkylphosphorane est amené à réagir avec fluorure d'hydrogène en présence d'un solvant et/ou d'un accepteur de proton approprié.

**6.** Procédé selon la revendication 5, **caractérisé en ce que** le solvant et/ou l'accepteur de proton utilisé est de l'eau, des alcools, des éthers, des sulfures, des amines, des phosphines, des acides carboxyliques, des esters, des glycols, des polyglycols, des polyamines, des polysulfures ou des mélanges d'au moins deux de ces solvants et/ou accepteurs de proton.

**7.** Procédé selon la revendication 6, **caractérisé en ce que** le solvant et/ou l'accepteur de proton approprié est méthanol, éthanol, acide acétique, éther diméthylique, éther diéthylique, carbonate de diméthyle, sulfure de diméthyle, diméthylformamide, triéthylamine ou triphénylphosphine ou un mélange d'au moins deux de ces composés.

**8.** Procédé selon l'une des revendications 5 à 7, **caractérisé en ce que** la réaction du perfluoroalkylphosphorane avec une solution de fluorure d'hydrogène est mise en oeuvre dans un solvant selon une concentration supérieure à 0, 1 % en poids de HF, de préférence supérieure à 5% en poids de HF, particulièrement de préférence supérieure à 10% en poids et tout particulièrement de préférence supérieure à 20% en poids, mais inférieure à 100% en poids, de HF.

**9.** Procédé selon l'une des revendications 5 à 8, **caractérisé en ce que** la réaction du perfluoroalkylphosphorane est mise en oeuvre à une température de - 50 à +100°C, de préférence à une température de -35 à +50°C, particulièrement de préférence entre 0 et 25°C.

**10.** Solution d'un acide selon l'une des revendications 1 à 4 et d'un solvant, **caractérisée en ce que** l'acide est présent selon une concentration supérieure à 2% en poids, de préférence supérieure à 20% en poids, particulièrement de préférence supérieure à 70% en poids et tout particulièrement de préférence supérieure à 80% en poids.

**11.** Procédé pour la préparation d'un sel de la formule générale [II]

$$[R_y PF_{6-y}]_m^- M^{m+} \hspace{3cm} [II]$$

dans laquelle
$M^{m+}$ est un cation mono-, di- ou trivalent,
m = 1, 2 ou 3
et y = 1, 2 ou 3,
et dans laquelle
les ligands R peuvent être identiques ou différents, et
R représente un groupe $C_{1-8}$-alkyle ou aryle perfluoré ou R représente un groupe $C_{1-8}$-alkyle ou aryle partiellement fluoré où certains des F ou H peuvent être substitués par chlore, où les groupes R alkyle ou aryle perfluoré et partialement fluoré peuvent être sous la forme de structures en chaîne ou en cycle,
**caractérisé en ce qu'**un acide selon l'une des revendications 1 à 4 est amené à réagir dans un solvant approprié avec un sel de la formule générale [III]

$$M^{m+} (A)^{m-} \hspace{3cm} [III]$$

dans laquelle
$M^{m+}$ est un cation mono-, di- ou trivalent,
A représente un anion basique ou neutre ou un mélange d'anions basiques ou un mélange d'au moins un anion basique et d'au moins un anion neutre,
et m = 1, 2 ou 3,
ou avec des métaux, des hydrures métalliques, des oxydes métalliques ou des hydroxydes métalliques.

**12.** Procédé selon la revendication 11, **caractérisé en ce que** le sel de la formule générale [III] contient au moins un anion oxyde, hydrure, carbonate, hydroxyde, chlorure, fluorure, formiate, acétate et/ou trifluoroacétate.

**13.** Procédé selon la revendication 11, **caractérisé en ce que** les métaux utilisés pour la neutralisation sont Li, Na, K, Rb, Mg, Cs, Ca, Sr, Ba, Sc, Y, Yb, La, Al, In, Cd et/ou Zn.

**14.** Procédé selon la revendication 11, **caractérisé en ce que** les oxydes utilisés pour la neutralisation sont $Li_2O$, $Na_2O$, $K_2O$, MgO, CaO, SrO, BaO, $Sc_2O_3$, $Y_2O_3$, $Yb_2O_3$, $La_2O_3$, $Al_2O_3$, CdO, ZnO, CuO, FeO et/ou $Fe_2O_3$.

**15.** Procédé selon la revendication 11, **caractérisé en ce que** les hydroxydes utilisés pour la neutralisation sont LiOH, NaOH, KOH, RbOH, CsOH, $Mg(OH)_2$, $Ca(OH)_2$, $Sr(OH)_2$, $Ba(OH)_2$, $Cd(OH)_2$, $Zn(OH)_2$, $Sc(OH)_3$, $Al(OH)_3$ et/ou $Cu(OH)_2$.

**16.** Procédé selon la revendication 11, **caractérisé en ce que** les hydrures utilisés pour la neutralisation sont LiH, NaH, $CaH_2$, $YH_3$ et/ou $AlH_3$.

**17.** Utilisation d'un acide selon l'une des revendications 1 à 4 en tant que catalyseur au niveau de la préparation de composés organiques.

**18.** Utilisation d'un acide selon l'une des revendications 1 à 4 en tant que remplacement pour les acides $HPF_6$ et/ou $HBF_4$ au niveau de réactions chimiques.